(19) Europäisches Patentamt
European Patent Office
Office européen des brevets

(11) **EP 4 289 499 A2**

## EUROPEAN PATENT APPLICATION

(12)

(43) Date of publication:
**13.12.2023  Bulletin 2023/50**

(21) Application number: **23204945.2**

(22) Date of filing: **15.09.2016**

(51) International Patent Classification (IPC):
***B01D 59/50*** *(2006.01)*

(52) Cooperative Patent Classification (CPC):
**C01B 3/501; B01D 59/12; B01D 59/30;
B01D 59/32; B01D 59/40; B01D 59/50; C01B 4/00;
C01B 5/00; G21F 9/02; G21F 9/06; G21F 9/12;
Y02E 30/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2015  US 201562239660 P
02.06.2016  US 201615171183**

(62) Document number(s) of the earlier application(s) in
accordance with Art. 76 EPC:
**16189066.0 / 3 153 467**

(71) Applicant: **Veolia Nuclear Solutions, Inc.
Lafayette, CO 80026 (US)**

(72) Inventors:
• **DENTON, Mark S
Irvine, California, 92614 (US)**

• **BONHOMME, Gaetan
Irvine, California, 92614 (US)**
• **BRATTON, Wesley L
Richland, Washington, 99352 (US)**
• **BONNETT, Nicephore
Irvine, California, 92614 (US)**

(74) Representative: **Potter Clarkson
Chapel Quarter
Mount Street
Nottingham NG1 6HQ (GB)**

Remarks:
This application was filed on 20.10.23 as a divisional
application to the application mentioned under INID
code 62.

(54)    **SYSTEM AND METHOD FOR THE SEPARATION OF TRITIUM FROM RADIOACTIVE WASTES**

(57)    A liquid phase catalytic exchange column with a catalyst is configured to receive hydrogen gas. The system uses the catalyst to exchange the hydrogen gas with the tritiated source yielding HT gas and tritiated water. The system monitors tritium content of the tritiated water. When a predetermined tritium level is detected, the tritiated water is released. The system also includes a gaseous permeation system comprising a permeable barrier for the selective extraction of gases.

EP 4 289 499 A2

**Description**

BACKGROUND OF THE INVENTION

Technical Field of Invention

The present invention relates generally to the treatment of radioactive waste and in particular to the separation, extraction, and disposition of tritium from radioactive waste materials in a modular, scalable, and extensible system termed a Tritium Remediation System, hereinafter referred to as TRS.

Description of the Related Art

Tritium is a radioactive isotope of hydrogen with a half-life of approximately 12.3 years. As tritium is both a radioactive contaminant and a potentially useful material for numerous scientific and commercial applications, the generation of tritium in pressurized water reactors (PWRs) is a matter of vital interest. Normal reactor operations produce quantities of tritiated water (HTO). In particular, the use of boron as a moderator within reactor systems naturally leads to the production of tritium and to the presence of tritium-containing water molecules both within the water used for cooling the reactor and within water used in storage pools for radioactive waste materials.

However, in addition to normal reactor operations, there can, and have been, significant nuclear events over the years including Chernobyl, Three Mile Island, and the Fukushima Daiichi nuclear disaster. The nuclear disaster at the Fukushima I Nuclear Power Plant began on 11 March 2011 and resulted in a nuclear meltdown of three of the plant's six nuclear reactors.

The failure occurred when the plant was hit by a tsunami that had been triggered by the magnitude 9.0 Tōhoku earthquake. The following day, 12 March, substantial amounts of radioactive material began to be released, creating the largest nuclear incident since the Chernobyl disaster in April 1986 and the largest (after Chernobyl) to measure Level 7 on the International Nuclear Event Scale (initially releasing an estimated 10-30% of the earlier incident's radiation). In an August 2013 press release, it was stated that the significant amount of radioactive water stored at the site awaiting clean-up was among the most pressing problems affecting the cleanup process, which is expected to take decades. There have been continued spills of contaminated water at the plant and some into the sea. Plant workers are trying to reduce the accumulation of contaminated water using measures, such as building an underground ice wall to reduce inflow, but they have not yet improved the situation significantly.

Available public water treatment processes remove many radioactive contaminants but are ineffective for tritium. Tritium is one of several radioactive isotopes that, over time, concentrate in organic systems and enter the food chain, possibly with adverse environmental and public health effects. Tritium contamination of the groundwater in the vicinity of nuclear power stations, and particularly at the Fukushima site, demand new approaches to tritium extraction processes. To date the focus has been on the extraction and production of high purity tritium. Many of the existing practices do not lend themselves to scalable processes, let alone ones for tritium extraction for the single purpose of disposal. It would be advantageous to have methods, systems, and apparatuses for the separation and removal of tritium from liquids such as the radioactive waste materials from the Fukushima Site. The capability to separate tritium from reactor water and radioactive waste materials is critical for clean, safe, and secure radioactive waste management; which in turn is important for the safe and cost-effective use of nuclear power.

The related art mainly discloses three types of hydrophobic catalysts used in the liquid phase catalytic exchange process, including a Pt/C/inert carrier (Pt/C/IC), a Pt/C/poly-tetra-fluoro-ethylene (Pt/C/PTFE), and a Pt/styrene-divinyl-benzene copolymer (Pt/SDB). The Pt/C/IC has high strength, good chemical stability, and strong activity while at the same time having a complex forming technique. The size and shape of the Pt/C/PTFE molecules are easily controlled whereas the utilization ratio of Platinum Group Metal (PGM) is low. The Pt/SDB has good activity yet it shows low strength and small particle size.

CECE extraction of hydrogen isotopes through catalytic exchange has been well known in the art of tritium extraction. Additional related art discloses wet proofing the catalyst for use in Liquid Phase Catalytic Exchange. Below is an example of an underlying exchange reaction:

$$HT + H_2O \leftrightarrow HTO + H_2 \qquad (1)$$

It has also been disclosed that different hydrogen isotope concentrations, different temperatures, and different pressures yield differing and predictable separation factors. Additional art discloses that depending on the physicochemical form of tritium at the start of the chemical exchange reaction, three reactions are possible:

$$HT(g) + H_2O(l) \leftrightarrow H_2(g) + HTO(l) \text{ (Forward reaction)} \qquad (2)$$

$$HTO(v) + H_2(g) \leftrightarrow H_2O(v) + HT(g) \text{ (Reverse reaction)} \qquad (3)$$

$$HTO(l) + H_2(g) \leftrightarrow H_2O(l) + HT(g) \qquad (4)$$

where (g), (v), and (l) are indicative of phases gas, vapor, and liquid.

Regardless of the exchange reaction identified above (e.g. equation (4) and equation (2)), it was clearly understood and known in the art there were multiple possible outcomes of a catalyzed reaction in the presence of a hydrophobic catalyst when the conditions including temperature, concentrations, flow rates, and pressures are set to optimize one of the desired reactions above (2), (3), or (4) within the LPCE column. However, what the related art did not anticipate is a combination of LPCE columns operative at different temperatures, pressures, concentrations, and flow rates as a viable solution for the continuous extraction of tritium. Nor does the related art disclose is a modular approach to a field deployable Tritium Remediation System (TRS) and methods for using a mixed bed catalytic exchange process in a Liquid Phase Catalytic Exchange/Closed Loop Continuous Process (LPCE/CLCP) system, that operates as a low temperature and low pressure continuous balanced process, designed to rapidly extract and isolate isotope specific products without generating unwanted products in the form of new waste streams.

What is needed is a modular, scalable, cost-effective tritium extraction system, designed specifically for a remediation mission rather than for purity. Further, the ability to rapidly deploy and configure for a particular mission is advantageous.

So as to reduce the complexity and length of the Detailed Specification, and to fully establish the state of the art in certain areas of technology, Applicant(s) herein expressly incorporate(s) by reference all of the following materials identified in each numbered paragraph below.

Mobile Processing System for Hazardous and Radioactive Isotope Removal, Ser. No. 14/748,535 filed June 24, 2015, with a priority date of June 24, 2014, which is herein incorporated by reference in its entirety.

Balanced Closed Loop Continuous Extraction Process for Hydrogen Isotopes, Ser. No. 14/294,033 filed June 2, 2014, with a priority date of May 31, 2013, which is herein incorporated by reference in its entirety.

Low-Energy Electrochemical Separation of Isotopes, Ser. No. PCT/CA2014/000293 filed March 28, 2014, with a priority date of March 29, 2013, which is herein incorporated by reference in its entirety.

Advanced Tritium System and Advanced Permeation System for Separation of Tritium from Radioactive Wastes and Reactor Water in Light Water Systems, Ser. No. 62/239,660 filed October 9, 2015, which is herein incorporated by reference in its entirety.

Applicant believes that some of the above-incorporated material constitutes "essential material" within the meaning of 37 CFR 1.57(c)(1)-(3), applicants have amended the specification to expressly recite the essential material that has been incorporated by reference as allowed by the applicable rules.

Aspects and applications of the invention presented here are described below in the drawings and detailed description of the invention. Unless specifically noted, it is intended that the words and phrases in the specification and the claims be given their plain, ordinary, and accustomed meaning to those of ordinary skill in the applicable arts. The inventors are fully aware that they can be their own lexicographers if desired. The inventors expressly elect, as their own lexicographers, to use only the plain and ordinary meaning of terms in the specification and claims unless they clearly state otherwise and then further, expressly set forth the "special" definition of that term and explain how it differs from the plain and ordinary meaning. Absent such clear statements of intent to apply a "special" definition, it is the inventors' intent and desire that the simple, plain and ordinary meaning to the terms be applied to the interpretation of the specification and claims.

The inventors are also aware of the normal precepts of English grammar. Thus, if a noun, term, or phrase is intended to be further characterized, specified, or narrowed in some way, then such noun, term, or phrase will expressly include additional adjectives, descriptive terms, or other modifiers in accordance with the normal precepts of English grammar. Absent the use of such adjectives, descriptive terms, or modifiers, it is the intent that such nouns, terms, or phrases be given their plain, and ordinary English meaning to those skilled in the applicable arts as set forth above.

Further, the inventors are fully informed of the standards and application of the special provisions of 35 U.S.C. § 112, ¶ 6. Thus, the use of the words "function," "means" or "step" in the Detailed Description or Description of the Drawings or claims is not intended to somehow indicate a desire to invoke the special provisions of 35 U.S.C. § 112, ¶ 6, to define the invention. To the contrary, if the provisions of 35 U.S.C. § 112, ¶ 6 are sought to be invoked to define the inventions, the claims will specifically and expressly state the exact phrases "means for" or "step for, and will also recite the word "function" (i.e., will state "means for performing the function of [insert function]"), without also reciting in such phrases any structure, material or act in support of the function. Thus, even when the claims recite a "means for performing the function of ..." or "step for performing the function of ... ," if the claims also recite any structure, material or acts in support of that means or step, or that perform the recited function, then it is the clear intention of the inventors not to invoke the provisions of 35 U.S.C. § 112, ¶ 6. Moreover, even if the provisions of 35 U.S.C. § 112, ¶ 6 are invoked to define the claimed inventions, it is intended that the inventions not be limited only to the specific structure, material or acts that are described in the preferred embodiments, but in addition, include any and all structures, materials or acts that perform the claimed function as described in alternative embodiments or forms of the invention, or that are well known present or later-developed, equivalent structures, material or acts for performing the claimed function.

BRIEF DESCRIPTION OF THE DRAWINGS

A more complete understanding of the present invention may be derived by referring to the detailed description when considered in connection with the following illustrative figures. In the figures, like reference numbers refer to like elements or acts throughout the figures.

Figure **1** is a block diagram illustrating five different tritium separation modules.
Figure **2** is a block diagram illustrating six potential modular tritium separation systems.
Figure **3** is a block diagram illustrating a modular tritium separation system in series.
Figure **4** is a block diagram illustrating an example of a system for processing radioactive waste materials that includes an ATS for separating tritium from liquid radioactive waste material.
Figure **5** is a block diagram illustrating an example embodiment of the present invention in which an ATS is used for separating tritium from the water used to cool a nuclear reactor.
Figure **6** is a block diagram illustrating an example embodiment of the present invention in which an ATS includes an electrolysis system, a column, and a monitor to monitor the expulsion of detritiated hydrogen.
Figure **7** is a block diagram illustrating an example embodiment of the present invention in which an ATS includes multiple catalytic exchange columns in series.
Figure **8** illustrates a reverse catalytic exchange column according to equation (2) below in the discussion of an alternate embodiment.
Figure **9** illustrates a reverse catalytic exchange column according to equation (3) below in the discussion of an alternate embodiment.
Figure **10** depicts the inputs and outputs of an electrolyzer as well as a second column as shown in Figure **9.**
Figure **11** depicts the input and output relationships of a two column system and a single column with electrolyzer.
Figure **12** further illustrates the two column depiction of Figure **11C.**
Figure **13** illustrates the two column system of Figure **12** in series.
Figure **14** is a block diagram illustrating an APS module is used for separating tritium from the hydrogen gas.
Figure **15** is a block diagram illustrating multiple APS modules in series.
Figure **16** is a block diagram illustrating how an electrolyzer may be replaced by a second column as a processing step prior to the APS module.
Figure **17A** is a block diagram illustrating the system of Figure **16** in more detail.
Figure **17B** is an alternate embodiment of Figure **17A.**
Figure **18** is a block diagram illustrating the system of Figure **17** in series.
Figure **19** is a block diagram illustrating a co-current exchange cell.
Figure **20** is a block diagram illustrating a counter-current exchange cell.
Figure **21** is a block diagram illustrating depicts the counter-current exchange cell of Figure **20** in more detail.
Figure **22A** depicts the embodiment of Figure **14** with an APS column in a system with an electrolyzer.
Figure **22B** depicts the system of Figure **22A** with the electrolyzer replaced by a CCE module.
Figure **22C** depicts the system of Figure **22B** in a near closed loop configuration.
Figure **23** is a block diagram illustrating the system of Figure **22C** in more detail.
Figure **24** is a block diagram illustrating the system of Figure **23** in series.

Elements and acts in the figures are illustrated for simplicity and have not necessarily been rendered according to any particular sequence or embodiment.

DETAILED DESCRIPTION OF THE INVENTION

In the following description, and for the purposes of explanation, numerous specific details are set forth in order to provide a thorough understanding of the various aspects of the invention. It will be understood, however, by those skilled in the relevant arts, that the present invention may be practiced without these specific details. In other instances, known structures and devices are shown or discussed more generally in order to avoid obscuring the invention. In many cases, a description of the operation is sufficient to enable one to implement the various forms of the invention, particularly when the operation is to be implemented in software.
It should be noted that there are many different and alternative configurations, devices and technologies to which the disclosed inventions may be applied. The full scope of the inventions is not limited to the examples that are described below. In the following examples of the embodiments, references are made to the various embodiments in which the invention may be practiced. It is to be understood that other embodiments may be utilized and structural and functional changes may be made without departing from the scope of the invention.

Disclosed herein are systems, methods, and apparatuses for separating tritium from radioactive waste materials and waste water from nuclear reactors. In particular, the present general inventive concept, in some of its several embodiments, includes highly mobile and modular reconfigurable systems and processes for the high throughput and treatment of contaminated water for the concentration, separation, and safe disposition of tritium contaminated waste streams. Modularity allows for optimal configurations based upon site conditions and water concentration levels.

Of particular interest here is the development of a high throughput, low concentration system for volume reduction purposes, as opposed to a low throughput, high concentration, and high purity systems for tritium product generation. The systems taught herein include a combination of systems that are known and understood in the art of tritium extraction - the novel aspects are the balanced combination of technologies used in a relatively closed loop approach, these modules include:

- Electrolyzer;
- A first Liquid Phase Catalytic Exchange (LPCE) column;
- A second Liquid Phase Catalytic Exchange (LPCE) column;
- An advanced permeation system (APS) module; and
- Either a co-current or counter-current exchange (CCE) module.

The modules may be combined in multiple configurations including:

- First Liquid Phase Catalytic Exchange (LPCE) column with electrolyzer;
- Second Liquid Phase Catalytic Exchange (LPCE) column with electrolyzer;
- Advanced Permeation System (MPS) with electrolyzer;
- Dual column LPCE running both forward and reverse catalytic reactions, as described in co-pending Balanced Closed Loop Continuous Extraction Process for Hydrogen Isotopes, Ser. No. 14/294,033 filed June 2, 2014, with a priority date of May 31, 2013, which is herein incorporated by reference in its entirety, that use a second column to replace the electrolyzer;
- A dual column system using an APS module for the gaseous diffusion and recovery of hydrogen gases and the second LPCE column for the production of HT; and
- A dual column system using an APS module for the gaseous diffusion and recovery of hydrogen gases coupled to either a co-current or counter-current exchange (CCE) process.

In some embodiments these configurations may be combined in series.

In some embodiments, the catalyst includes a Platinum Group Metal, (PGM).

In some embodiments, said catalyst includes PGM coated with a hydrophobic material.

In some embodiments, said catalyst includes PGM coated with a fluoropolymer.

In some embodiments, said catalyst includes PGM coated with a polytetrafluoroethylene.

Some embodiments further include a tritium monitor to monitor the tritium content of the gaseous exhaust within said gaseous exhaust subsystem.

Some embodiments further include a condenser to condense at least some of the gaseous exhaust.

Some embodiments further include a stabilization subsystem for treating said concentrated tritium waste product.

In some embodiments, a method further includes monitoring the tritium content of the effluent with a tritium monitor.

In some embodiments, a method further includes condensing at least some of the effluent.

In some embodiments, a method further includes stabilizing the high activity tritium waste product.

Disclosed herein are systems, methods, and apparatuses for separating tritium from radioactive waste materials and waste water from nuclear reactors. In particular, the present general inventive concept, in some of its several embodiments, includes highly mobile and modular reconfigurable systems and processes for the optimal high throughput and treatment of contaminated water for the concentration, separation, and safe disposition of tritium contaminated waste streams. Herein the term "separation" refers to any of separation, isolation, and/or removal.

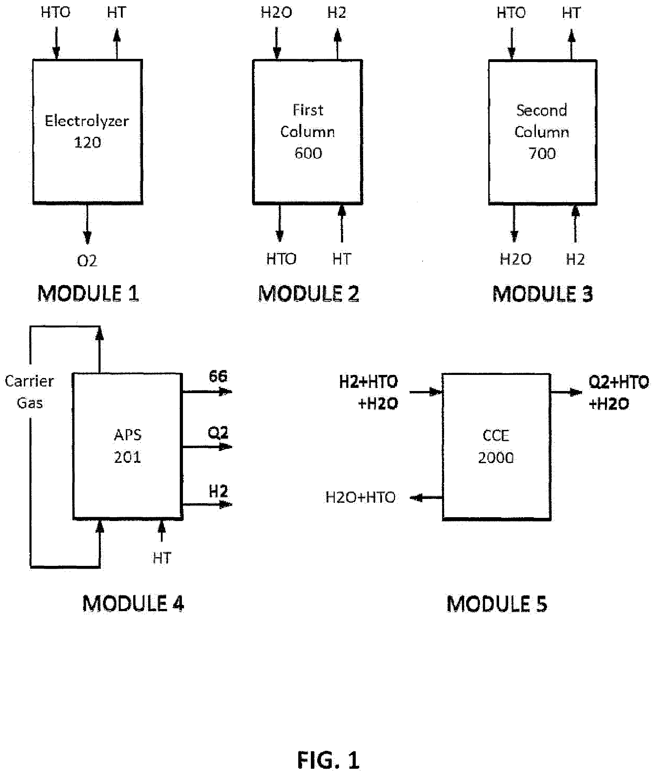

Figure **1** depicts five different tritium separation systems (modules) that are known in the art. The modules may be combined to form relatively balanced closed loops. The modules include:

- Electrolyzer **120** that separates tritiated water (HTO) into tritiated hydrogen (HT) and oxygen (Oz);

- A first Liquid Phase Catalytic Exchange (LPCE) column **600** that separates gaseous tritiated hydrogen (HT) by passing the tritium to the input water ($H_2O$) and forming tritiated water (HTO) and clean hydrogen ($H_2$);
- A second Liquid Phase Catalytic Exchange (LPCE) column **700** that separates tritiated water (HTO) and hydrogen ($H_2$) by passing the tritium from the tritiated water (HTO) to clean Hydrogen gas ($H_2$) to produce tritiated hydrogen (HT) and clean water ($H_2O$);
- An advanced permeation system (APS) module **201** that separates tritiated gases into clean hydrogen ($H_2$) at a first end and tritium ($T_2$) at a second end; and
- Either a co-current or counter-current exchange (CCE) module **2000** that transfers tritium ions from tritiated water (HTO) to tritiated hydrogen (HT) and tritium ($T_2$).

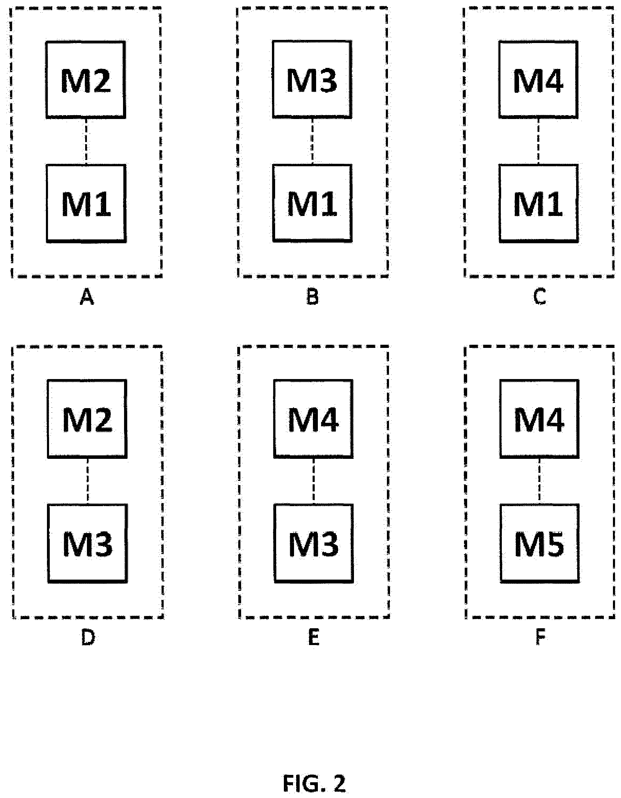

Each of these known tritium separation modules may be used in conjunction with another and/or in series to further increase the concentration of the final tritiated product and the overall efficiency of the system. Figure **2** depicts six potential systems, each utilizing two different modules from Figure **1.** Each of the six potential systems are shown in more detail in subsequent figures. Other systems are possible, such as cascading a series of two or more of the same or different modules.

- First Liquid Phase Catalytic Exchange (LPCE) column with electrolyzer;
- Second Liquid Phase Catalytic Exchange (LPCE) column with electrolyzer;
- Advanced Permeation System (MPS) with electrolyzer;
- Dual column LPCE running both forward and reverse catalytic reactions, as described in co-pending U.S. application Balanced Closed Loop Continuous Extraction Process for Hydrogen Isotopes, Ser. No. 14/294,033 filed June 2, 2014, with a priority date of May 31, 2013, which is herein incorporated by reference in its entirety, that use a second column to replace the electrolyzer;
- A dual column system using an APS module for the gaseous diffusion and recovery of hydrogen gases and the second LPCE column for the production of HT; and
- A dual column system using an APS module for the gaseous diffusion and recovery of hydrogen gases coupled to either a co-current or counter-current exchange (CCE) process.

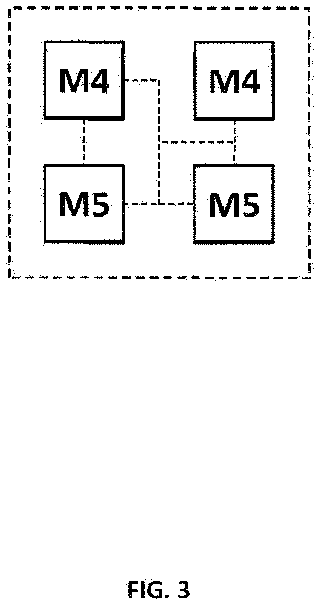

Figure **3** depicts system F of Figure **2** in series. This configuration is shown and described in further detail in Figure 25.

SEPARATION

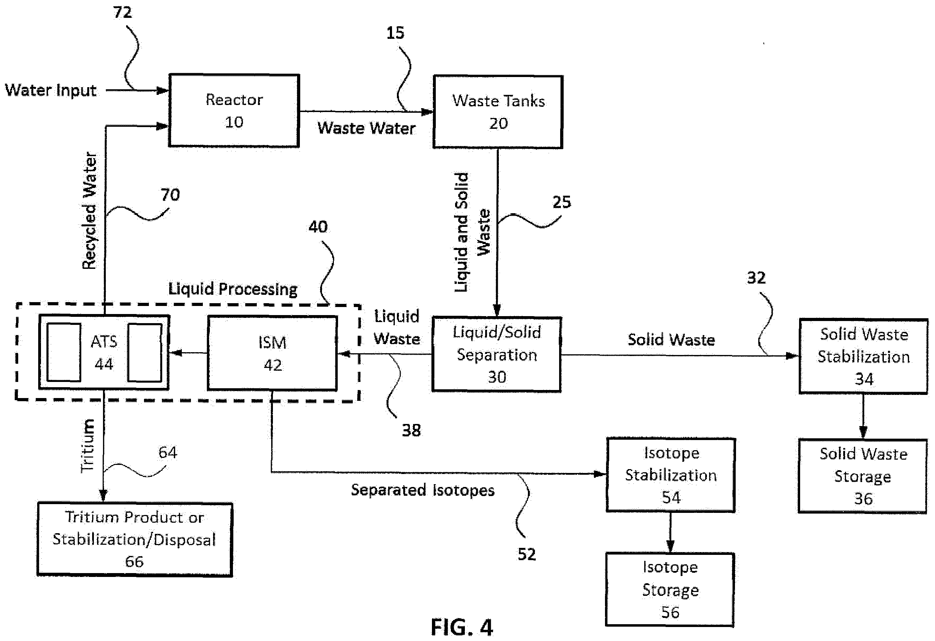

Figure **4** illustrates an example embodiment of a larger system within which an advanced tritium system (ATS) **44** for tritium separation is a component. As shown in the illustration, radioactive waste material **15** from a nuclear reactor **10** is conveyed first to waste tanks **20,** where the waste material is kept submerged in water; as a result of storing radioactive waste, the water itself comes to contain a concentration of radioactive isotopes. The waste material, which at this stage includes both liquid and solid wastes **25,** is conveyed from the waste tanks **20** to a liquid/solid separation system **30** where liquid wastes **38** (including the water from the waste tanks **20**) are separated from the solid wastes. From the liquid/solid separation system **30,** the solid wastes **32** proceed to stabilization **34** and storage **36.** It is possible that, in some instances, not all of the moisture or liquid mixed with the solid wastes **32** will be separated from the solid wastes **32** by the liquid/solid separation system **30,** in which case the stabilization and storage of those wastes will proceed differently.

From the liquid/solid separation system **30,** liquid wastes **38** that are substantially free of solid waste material proceed to a liquid processing system **40.** In some embodiments, such as the one illustrated in Figure **4,** the liquid processing system **40** comprises an ion-specific-media (ISM) based system **42** for the separation of specific ions and an ATS **44** for the separation or removal of tritium from the liquid wastes **38.** Separated ions **52** removed by the ISM from the liquid wastes **38** are stabilized **54** and moved to storage **56** or other disposition (with the final disposition or storage conditions often dependent upon the specific ions involved). Tritium **64** removed from the liquid wastes proceeds to its own disposition **66.** The liquid **70** (mostly water), now substantially free of specified radioactive isotopes and tritium, usually is recycled into the reactor **10,** where it is combined with other water **72** fed into the reactor **10.** In some embodiments, liquid emerging from the liquid processing system **40** proceeds, not to the reactor **10** to be recycled, but to storage for low-classification waste.

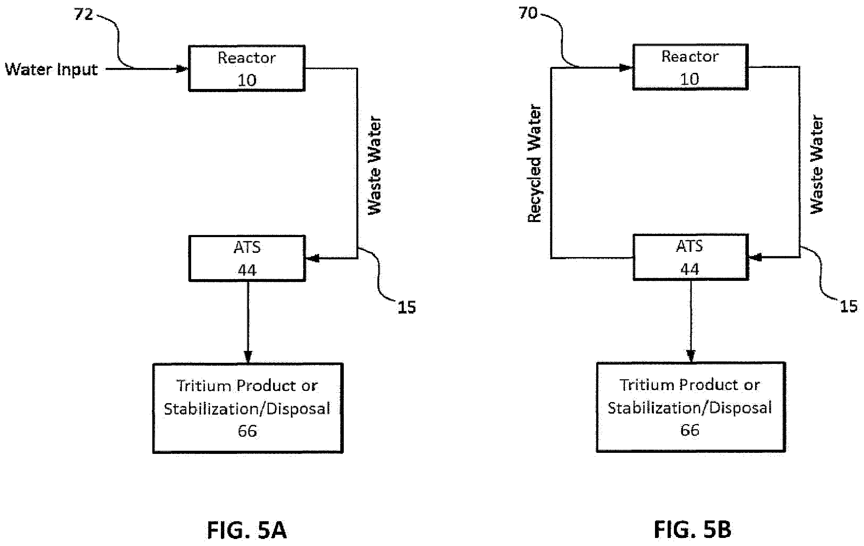

Figure **5A** illustrates another way in which an ATS **44** according to the present invention is used with a nuclear reactor **10.** In the illustrated embodiment, water input **72** is supplied to the reactor **10.** Waste water **15** emerges from the reactor **10** and is passed through an ATS **44** in order to remove tritium contaminants from the water. The separated tritium is diverted to disposal **66,** either on-site or off-site, or made into a concentrated product. Alternatively, the water **70,** substantially freed of tritium contaminants, is recycled back into the reactor **10** as shown in Figure **5B.**

Passing tritiated water from a nuclear reactor **10** (Figures **4** and **5**), or from radioactive waste, through an ATS **44** results in a product of concentrated tritiated water. The ATS **44** reduces the volume of water that includes tritium.

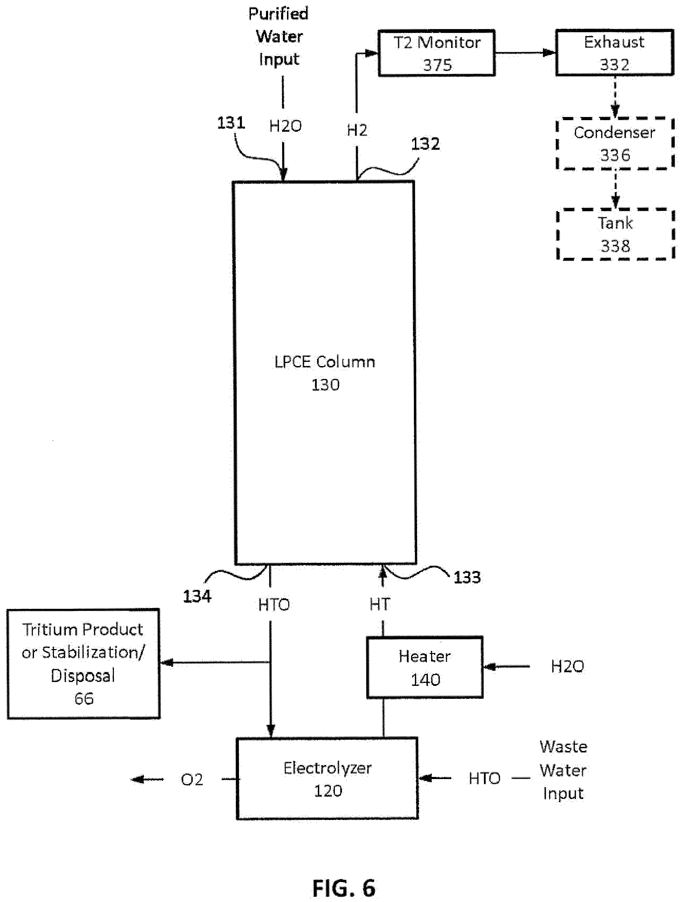

Some embodiments of the present invention include using an ATS **44** to concentrate tritium in reactor water into a small volume of concentrated tritiated water. Figure **6** illustrates one example embodiment of the present general inventive concept. In the illustrated example embodiment, low activity waste water containing HTO (and other tritiated water compounds, like $T_2O$) is input into electrolyzer **120** or other separation system -- generally an alkaline electrolyzer, although other electrolyzers and separation approaches are contemplated -- which separates the tritiated water to produce oxygen gas (Oz) and hydrogen gas comprising a number of hydrogen isotopes and isotope combinations (e.g. Hz, HT, $T_2$). The oxygen gas is diverted and discharged from the ATS **44,** while the hydrogen gas is combined with heated water vapor within a heater **140** (combining the hydrogen gas with heated water vapor increases the throughput of the system); the mixture of hydrogen gas and water vapor is then directed through inlet **133** into the bottom of a LPCE column **130**. Purified water (deionized or distilled) enters the top of the LPCE column **130** at inlet **131**. Within the LPCE column **130**, tritiated gases (HT, $T_2$) from the electrolysis system **120** are retained on the catalyst, while hydrogen gas ($H_2$) passes through the LPCE column **130** to outlet **132** and is expelled as gaseous exhaust **332**. As the tritiated gases from the electrolysis system **120** rise through the LPCE column **130** and are retained on the catalyst, the deionized water trickles down the LPCE column **130** and reacts with the retained tritiated gas molecules to form HTO (and, sometimes, $T_2O$). The newly formed tritiated water product exits column **130** at outlet **134** as a concentrated high activity tritium product. In some embodiments, the concentrated high activity tritium product is passed through the electrolyzer **120** and LPCE column **130** multiple times to enhance the concentration of tritium in the concentrated high activity tritium product. In some embodiments, the concentrated high activity tritium product exits the system for storage, stabilization, or disposal **66.**

As noted, the hydrogen gas ($H_2$) produced by electrolysis and passed through the LPCE column **130** generally is expelled along with water vapor as gaseous exhaust **332,** as shown in Figure **6**. In some embodiments, a tritium monitor **375** measures the tritium content of the exhaust gas as it leaves the LPCE column **130,** thus monitoring whether tritium is being released from the ATS **44**. A number of options exist for the disposition of the expelled hydrogen gas exhaust **332**. In some embodiments, the hydrogen gas and water vapor optionally are passed through a condenser **336** and then into a storage tank **338**. In some embodiments, the hydrogen gas is used as fuel. In some embodiments, the hydrogen gas is recombined with oxygen to form water. In some embodiments, the hydrogen gas is burned.

Multiple options exist for the further disposition of the tritium after it is separated and concentrated by the ATS **44.** In some embodiments, the concentrated tritiated water is buried or placed into long-term storage in canisters. In some embodiments, tritium gas is recovered from the concentrated tritiated water.

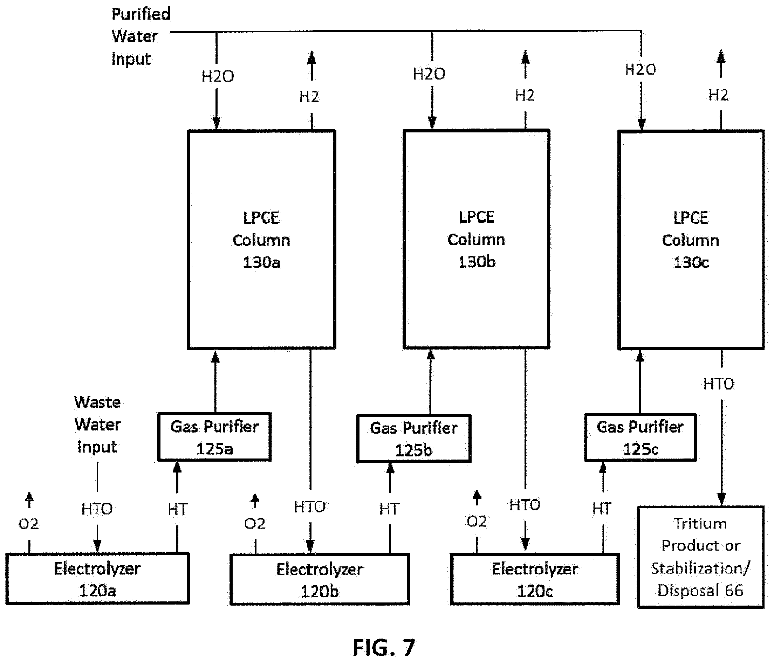

In some embodiments of the present invention, tritiated water is passed through multiple catalytic exchange columns in series. Figure **7** illustrates one embodiment of the present invention in which tritiated water from a reactor **10** (Figures **4** and **5**) or a waste source is passed through a first electrolyzer **120a,** a first gas purifier **125a,** and a first catalytic exchange column **130a;** the output tritiated water from the first catalytic exchange column **130a** is then passed through a second electrolyzer **120b,** a second gas purifier **125b,** and a second catalytic exchange column **130b;** and the output tritiated water from the second catalytic exchange column **130b** is then passed through a third electrolyzer **120c,** a third gas purifier **125c,** and a third catalytic exchange column **130c** before proceeding to disposition **66.** Passing the tritiated water through multiple catalytic exchange columns more thoroughly separates protonic hydrogen from tritium and yields a purer, more concentrated final tritium product and/or minimizes the volume of tritium-contaminated waste water as well as minimizing or eliminating the environmental discharge of the contaminated water.

CATALYTIC EXCHANGE COLUMN SCIENCE

It was disclosed in the prior art that different hydrogen isotope concentrations, different temperatures, and different pressures yielded differing and predictable separation factors depending on the physicochemical form of tritium at the start of the chemical exchange reaction, three reactions were possible:

$$HT(g) + H_2O(l) \leftrightarrow H_2(g) + HTO(l) \text{ (forward reaction)} \qquad (1)$$

$$HTO(v) + H_2(g) \leftrightarrow H_2O(v) + HT(g) \text{ (reverse reaction)} \qquad (2)$$

$$HTO(l) + H_2(g) \leftrightarrow H_2O(l) + HT(g) \qquad (3)$$

where (g), (v), and (l) are indicative of phases gas, vapor, and liquid.

Regardless of the exchange reaction identified above (e.g. equation (2) and equation (1)), it was clearly understood and known in the art there were multiple possible outcomes of a catalyzed reaction in the presence of a hydrophobic catalyst when the conditions including temperature, concentrations, flow rates, and pressures are set to optimize one of the desired reactions above (1), (2), or (3) within the LPCE column.

Table 1 shows the equilibrium constant of reaction (1), $K = \frac{[HTO]}{[HT]}$ , at different temperatures. The fact that K decreases with temperature implies that the reverse reaction (2) is thermodynamically favored at higher temperatures.

Table 1 - Equilibrium Constant for Reaction (1)

| Temperature (°C) | Equilibrium Constant |
|---|---|
| 20 | 6.47 |
| 56 | 5.05 |
| 80 | 4.37 |
| 158 | 3.10 |
| 217 | 2.64 |
| 303 | 2.17 |

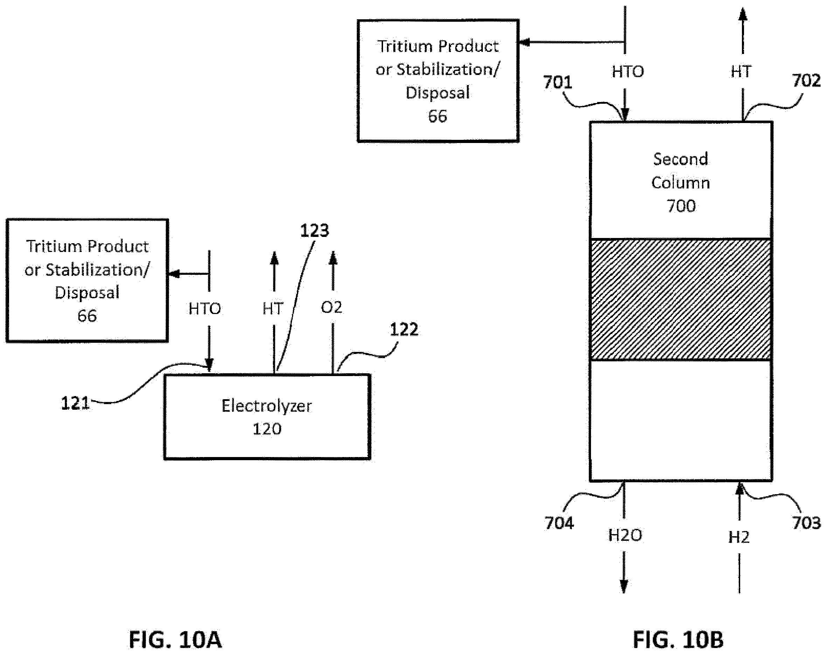

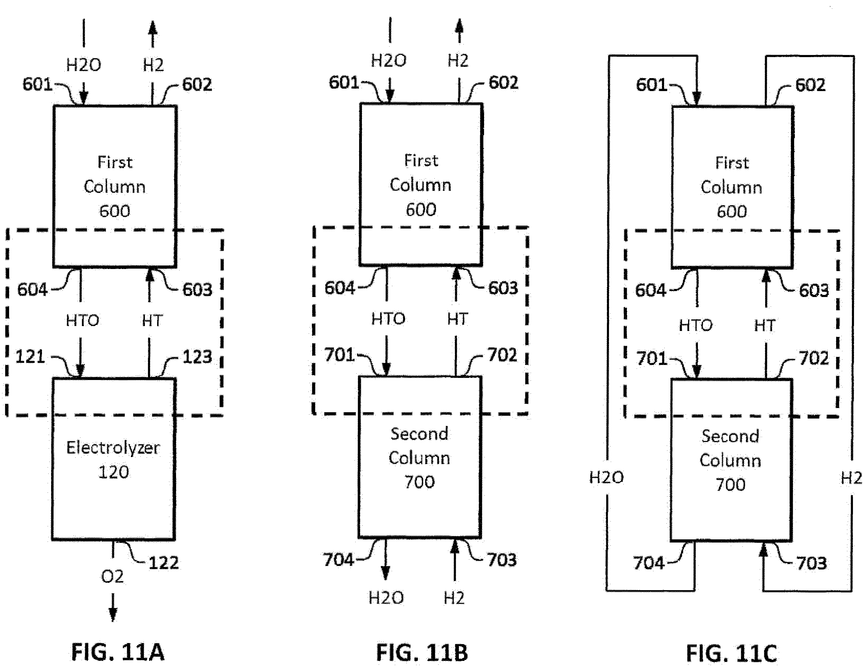

In an embodiment, and with the above in mind, it is possible to replace the electrolyzer of the previous embodiments with a second LPCE column catalyzing the reverse reaction (2) as illustrated by Figures **10** and **11**. The dual-column system then works as follows. In the first-column, also called "forward column", tritium is transferred from hydrogen gas to water following the forward reaction (1) at a given temperature $T_f$. In the second column, also called "reverse column", tritium is transferred from water to hydrogen gas following the reverse reaction (2) at a temperature $T_r > T_f$. Thus, a concentration profile is established at equilibrium such that the highest tritium concentrations are found at the bottom **603, 604** (top **701, 702**) of the forward (reverse) column. Conversely the hydrogen (water) flow **602** (**704**) at the outlet of the forward (reverse) column is essentially free of tritium and can be recirculated into the inlet **703** (**601**) of the reverse (forward) column, as illustrated by Figure **11C.**

For optimal efficiency and molar throughputs of the system, it is expected that the temperature of the forward column should be in the range of $T_f$ = 20-60°C, the temperature of the reverse column in the range of $T_r$ = 80-140°C, and the gas pressure in either column in the range of 5-20 atm.

ELECTROLYZER LPCE MODULAR SYSTEMS A, B, AND C

MODULES 1-3, SYSTEMS A-C

Thus, in some of the several example embodiments of the present invention depicted in Figures **1-3,** systems, methods, and processes are disclosed for a modular TRS for high throughput, low concentration processing of low activity tritiated light water including the separation of at least some of the tritiated water to produce hydrogen and tritium gas.

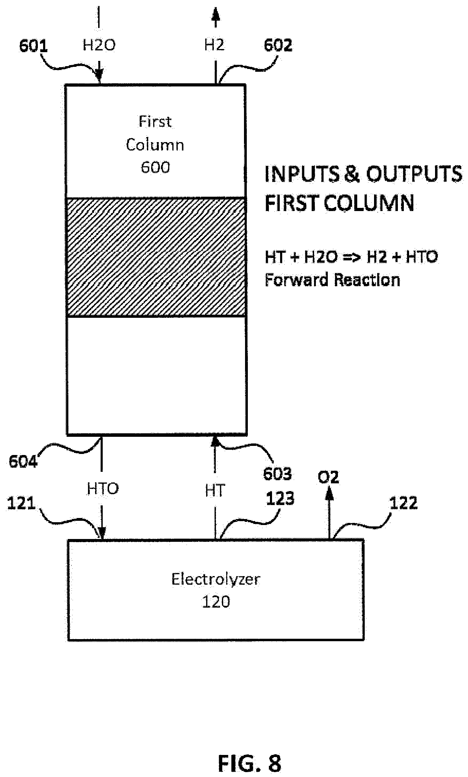

Embodying these concepts, and referring now to Figure **8** the first LPCE column **600** (hereinafter referred to as the first column), comprises an inlet **601** at the top wherein clean water ($H_2O$) is introduced; an outlet **602** at the top where clean hydrogen gas ($H_2$) is exhausted; an inlet **603** at the bottom where tritiated hydrogen gas (HT) is introduced; and an outlet **604** at the bottom where tritiated water (HTO) exits the first column **600**. This operation is defined by equation (1). The electrolyzer **120** vents oxygen gas (Oz) at **122** to the atmosphere.

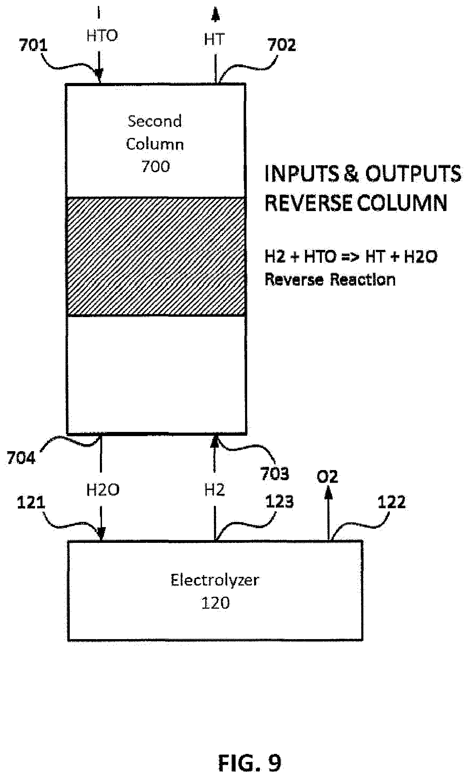

Referring now to Figure **9** which depicts a second LPCE column **700** (hereinafter the second column) comprising a same catalyst in some embodiments as the first column **600,** an inlet **701** at the top wherein tritiated water (HTO) is introduced; an outlet **702** at the top where tritiated hydrogen gas (HT) is exhausted; an inlet **703** at the bottom where clean hydrogen gas ($H_2$) is introduced; and an outlet **704** at the bottom where clean water ($H_2O$) exits the second column **700**. This operation is defined by equation (2). The electrolyzer **120** vents oxygen gas (Oz) at **122** to the atmosphere.

In a discussion of the role of the electrolyzers **120** in Figures **6, 8,** and **9** and their respective inputs and outputs: in Figure **6,** the electrolyzer **120** receives HTO(*l*) from at least one of the LPCE column **130** at outlet **134** and/or from waste water input, and HT(*g*) exits the electrolyzer and enters the LPCE column **130** at inlet **133;** thus, in an alternate embodiment as depicted in Figure **10A** and **10B,** the electrolyzer **120** may be replaced by a second column **700** configured to accept $H_2$ (hereinafter "clean hydrogen gas") and feed water containing HTO and produce hydrogen gas comprising a number of hydrogen isotopes and isotope combinations (e.g. $H_2$, HT, $T_2$).

The electrolyzer **120** of Figure **8** takes in tritiated water in liquid phase (HTO) from first column outlet **604** and outputs HT gas back into the first column **600** at inlet **603.** Figure **9** depicts a second column **700** that has the same inputs and outputs of the electrolyzer **120** of Figure **8**. Figure **10A** illustrates an embodiment of the electrolyzer **120** of Figure **8** with the addition of an outlet between the first column **600** and the electrolyzer **120** wherein high activity tritium product can be removed for storage, stabilization, or disposal **66**. Figure **10B** illustrates that according to the embodiments of Figure **8** and **9,** a simple substitution can be made to replace the electrolyzer **120** of Figure **8** with the second column **700** of Figure **9** as both have the same inputs and outputs.

REPLACING THE ELECTROLYZER WITH A SECOND COLUMN (MODULE 3)

MODULE 2 AND SYSTEM D

Figure **11** further illustrates the natural evolution of the system following the substitution depicted in Figure **10A** and **10B**. Figure **11A** depicts the embodiment of Figure **8** with the first column **600** in a system with an electrolyzer **120**. Figure **11B** depicts the substitution of the electrolyzer **120** with the second column **700**. Since the first column **600** output from outlet **604** is the same as the second column **700** input at inlet **701** and the first column **600** input at inlet **603** is the same as the second column **700** output at outlet **702,** the system can become closed loop as depicted in Figure **11C**.

In an embodiment, the first column **600** comprises an elongated cylindrical column having a first end, a second end, stainless steel tubing wrapped with a heating mantle, an over coat with insulation. The first column **600** may contain liquid and/or gas flow distributors or diffusers to enhance the distributions and mixing in the first column **600**. In some embodiments, feed water is introduced at or above the mid-point of the first column **600.**

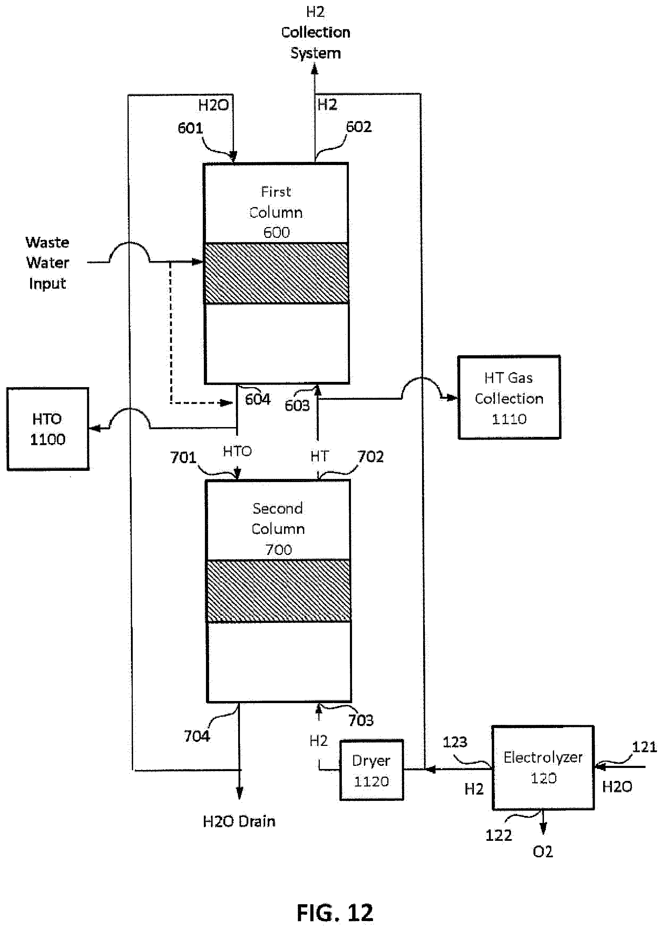

Figure **12** depicts an embodiment of the system of Figure **11C**. The embodiment of Figure **12** includes additional inputs and outputs to the system. Tritiated water may be collected **1100** from between first column outlet **604** and second column inlet **701**. HT gas may be collected **1110** from between second column outlet **702** and first column inlet **603**. Liquid water may be drawn from the bottom of the second column **700** between second column outlet **704** and first column inlet **601.**

In an embodiment of Figure **12,** $H_2$ feed gas is preheated (by a heating means such as a heater or dryer **1120**) and introduced into the bottom of the second column **700** at inlet **703** creating a counter flow (i.e., will flow in the opposite direction) to the tritiated water (HTO) in the second column **700**. The second column **700** may include a catalyst for catalyzing the reaction of tritiated light water (HTO) with $H_2$ gas forming an HT gas and clean water according to equation (2).

The $H_2$ gas is supplied to the second column **700** from an electrolyzer **120** adapted to produce the $H_2$ gas. Alternately the $H_2$ gas may be supplied from a remote location such as a storage tank. The $H_2$ feed gas is introduced into the second column **700** at inlet **703**. To aide in initiating and maintaining the catalytic reaction, temperature ranges of 35-250 degrees centigrade are used at pressures of 500-1100 mbar; in alternate embodiments, pressures and temperatures may be multiples or fractions of the preferred embodiment.

These reactions create tritium concentration gradients of highest concentration at the top of the second column **700** and the bottom of the first column **600,** and lowest concentration at the outer ends of each column. HT gas emerges from the top of the second column **700** at outlet **702** and enters the bottom of the first column **600** at inlet **603**. Water ($H_2O$) emerges from the bottom of the second column **700** at outlet **704** and enters the top of the first column **600** at inlet **601**. A portion of the water ($H_2O$) may be transferred out of the system via a drain at the bottom of the second column **700**. The drained water ($H_2O$) may be stored or reused. For example, the drained water ($H_2O$) may be stored in a container, reservoir, or holding tank for later transport or use.

The water ($H_2O$) is transferred into the top of the first column **600** at inlet **601**. The first column **600** is filled with a catalyst. The HT gas is transferred into the bottom of the first column **600** at inlet **603.** The second and first columns, **700** and **600** respectively, in the preferred embodiment are constructed such that the first column **600** is capable of catalyzing the reaction of water ($H_2O$) and HT gas into tritiated water (HTO) and $H_2$ gas; this reaction is represented by equation (1).

An embodiment of Figure **12** is implemented such that the water ($H_2O$) being introduced into the top of the first column **600** at inlet **601** will act as a counter flow to the rising HT gas introduced in the bottom of the first column **600** at inlet **603.** The sinking water ($H_2O$) exchanges ions with the introduced HT gas as it traverses the forward catalyst and is mixed with the clean water ($H_2O$) resulting in a catalyzed reaction according to equation (2). Tritiated water (HTO) emerges at the bottom of the first column **600** at outlet **604.**

In an embodiment of Figure **12** the clean $H_2$ gas is introduced into the bottom of the second column **700** at inlet **703** and the $H_2$ gas may come from the first column **600**. The tritiated water (HTO) emerging from the first column **600** at outlet **604** is introduced into the top of the second column **700** at inlet **701.**

In a closed loop system, where there is no consistent introduction of feed water and no clean water ($H_2O$) is removed from the system via a drain, there is no generation of product and the molar ratio of hydrogen gas to feed water is operatively efficient at 1. In alternate embodiments, molar ratios ranging from 0.5 to 4 may be desired, while still retaining a closed loop. Once the tritium concentration gradients are established in the columns, a tritiated water (HTO) feed **1100** can be introduced between the columns and detritiated water ($H_2O$) **500** can be drawn off at the drain for storage, transport, or other disposition.

In an embodiment of Figure **12,** the tritiated feed water (HTO) **1100** is introduced at any point between the mid-point of the first column **600** and top of the second column **700.** The tritium in this feed will concentrate into the top of the second column **700** and bottom of the first column **600** and the excess liquid from the feed can be drawn from the bottom of the second column **700** as clean water ($H_2O$) via a drain. This process will allow a feed of tritiated water (HTO) and a product of detritiated water ($H_2O$) without any need for electrolysis or recombination, therefore greatly reducing the complexity and the energy needs of the whole process. Furthermore, the system may be sized to keep the fraction of tritium released through the drained water below any preset limit, in some embodiments typically in the range of 0.1% to 10% of the total tritium inventory. Continuous operations for a System D operation are discussed in co-pending application Advanced Tritium System and Advanced Permeation System for Separation of Tritium from Radioactive Wastes and Reactor Water in Light Water Systems, Ser. No. 62/239,660 filed October 9, 2015, which is herein incorporated by reference in its entirety.

In an embodiment of Figure **12,** some of the hydrogen gas supplied to the second column **703** is supplemented by an electrolyzer of varying size, which may be used to decrease the cross section of the forward and reverse columns at a fixed waste water feed. This embodiment then offers an additional opportunity for optimization by allowing the designer to find a trade-off between the total volume of the column in the system and the energy consumption of the electrolyzer. In some other embodiments, the electrolyzer is fed with a fraction of the tritiated water at the bottom **604** of the first column, and used to feed tritiated hydrogen to the bottom **603** of the same column.

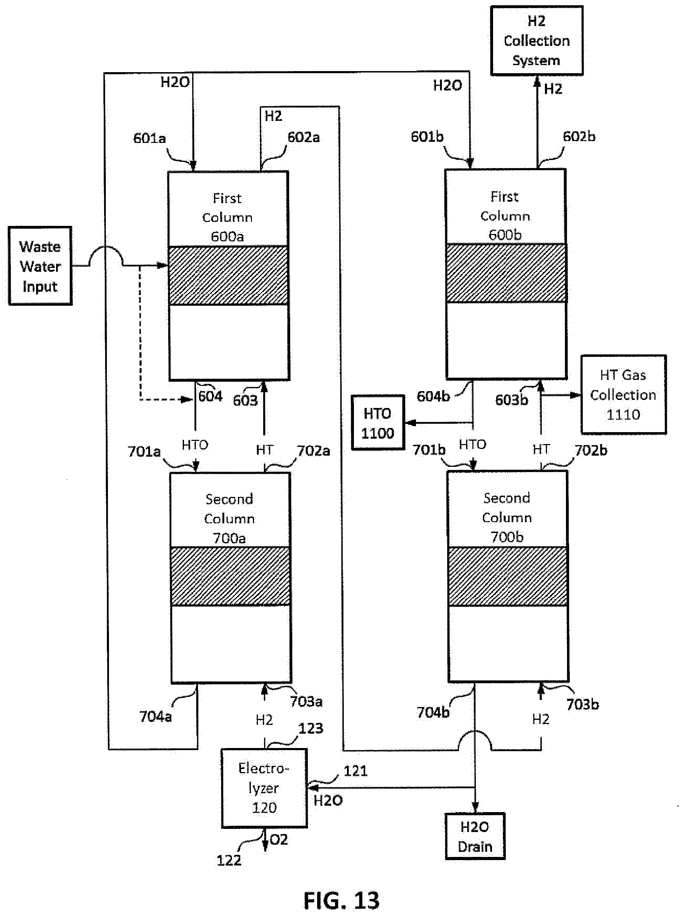

Figure **13** depicts the system of Figure **12** in series. As in Figure **12,** waste water is input in the first column **600a** or, alternatively, in between the first column **600a** and second column **700a.** In this configuration, the $H_2O$ product from second column **700a** outlet **704a** is routed back through both first columns **600a,b** at inlets **601a,b.** The $H_2O$ output from second column **700b** at outlet **704b** is at least one of drained and fed through and electrolyzer **120** at inlet **121** and the resulting $H_2$ from outlet **123** is passed into second column **700a** at inlet **703a.** The $H_2$ output from first column **600a** at outlet **602a** is fed into the second column **700b** at inlet **703b** instead of the first second column **700a** inlet **703a.** As in Figure **12,** HTO and HT gas can be collected from between first column **600b** and second column **700b** at **1100** and **1110,** respectively. The $H_2$ output from first column **600b** at outlet **602b** is collected at the $H_2$ collection system.

MODULE 4 - PERMEATION

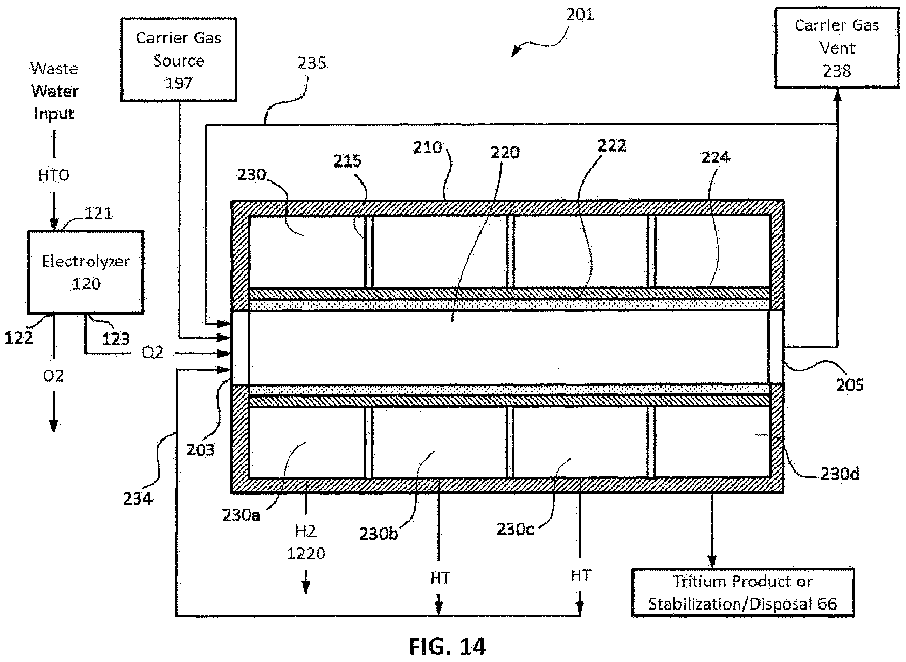

In some embodiments of the present invention, tritium is separated from protonic hydrogen through a combination of gas chromatography or gaseous diffusion and hydrogen permeation through metal -- a combination referred to collectively as the advanced permeation system (APS) **201.** In one embodiment of the APS **201,** illustrated in Figure **14,** tritiated waste water (HTO) enters an electrolyzer **120** and is broken up by electrolysis into a combination of oxygen gas (Oz) and tritiated hydrogen gas comprising a number of hydrogen isotopes and isotope combinations (e.g. $H_2$, HT, $T_2$). The tritiated hydrogen gas then enters the APS module **201,** which in Figure **14** is illustrated by a sectional view of a chromatography column or cylinder with an outer wall **210** fabricated from copper, stainless steel, or a similar material. A carrier gas, such as helium or argon, from a carrier gas source **197** is also inserted into the APS module **201** along with the tritiated hydrogen gases. In many embodiments, the gases are pressurized as they enter the APS module **201.** In some embodiments, the gases are heated as they enter the APS module **201.**

In the illustrated example embodiment, the gases under pressure and slightly elevated temperature enter a first end **203** of the cylindrical APS module **201** and travel along the length of the APS module **201.** Within the APS module **201,** the tritiated hydrogen gas and the carrier gas **197** initially travel within the interior volume **220** of at least one inner cylinder. The inner cylinder is fabricated from a material that is at least semipermeable to hydrogen. In the illustrated embodiment of Figure **14,** the inner cylinder comprises two layers: a first layer **222** of stainless steel frit, in direct contact with the interior volume **220** of the inner cylinder; and a second layer **224** of PGM or PGM alloy, such as a PGM/Silver alloy. In some embodiments, the stainless steel frit layer is omitted, and the PGM layer is in direct contact with the interior volume **220** of the inner cylinder. Surrounding the first layer **222** and second layer **224** of the inner cylinder and enclosed by the outer wall **210** of the APS module **201** is a separation volume **230.**

As the pressurized mixture of tritiated hydrogen gas and carrier gas enters the first end **203** of the APS module **201** and passes through the internal volume **220** of the inner cylinder, pressure drives hydrogen molecules to permeate the stainless steel frit **222** and the PGM layer **224,** so that hydrogen gases collect in the separation volume **230** between the PGM layer **224** and the outer wall **210.** The carrier gas, not permeating the stainless steel frit **222** and the PGM layer **224,** exits the internal volume **220** of the inner cylinder at the second end **205** of the APS module **201** and is vented at vent **238** or recirculated. Consistent with gas chromatography, lighter hydrogen molecules ($H_2$) permeate the stainless steel frit **222** and the PGM layer **224** closer to the first end **203** of the cylindrical APS module **201;** heavier hydrogen molecules (e.g., HT, $T_2$) permeate the stainless steel frit **222** and the PGM layer **224** closer to the second end **205** of the cylindrical APS module **201.** In some embodiments, the APS module **201** includes partitions **215** that divide the separation volume **230** into distinct compartments **230a-d;** the compartments closer to the first end **203** of the APS module **201** for receiving lighter hydrogen molecules, and the compartments closer to the second end **205** of the APS module **201** for receiving the heavier hydrogen molecules, including molecules with tritium atoms. Lighter hydrogen gas ($H_2$) within compartment **230a** is released from the APS module **201**. The heavier tritiated hydrogen gas, collected in the compartment **230d** at the second end **205** of the APS module **201,** passes from the APS module **201** to final disposition or further separation treatment **66**. Gas collected in the intermediate one or more chambers **230b,c** is a mixture of hydrogen ($H_2$) and tritiated hydrogen (HT, $T_2$) and is recycled **234** through the APS module **201** in order to further separate hydrogen from the tritiated gas mixture. In some embodiments the carrier gas is also recycled **235** through the APS module **201** in order to contain and reprocess any tritiated gas remaining in the gas stream at the second end **205** of the APS module **201,** to minimize carrier gas usage, and to recover heat.

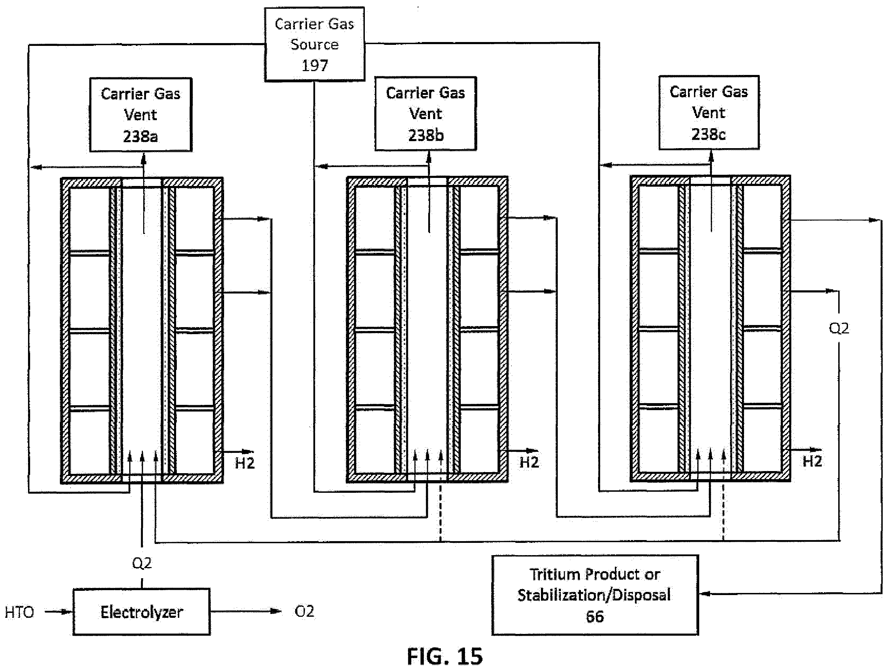

In some embodiments of the present invention, the hydrogen gas with a mixture of hydrogen ($H_2$) and heavier hydrogen isotopes (e.g. HT, $T_2$) is passed through several APS modules in series in order to enhance the separation of lighter hydrogen from heavier hydrogen isotopes, including tritium. Figure **15** illustrates such a system with three APS modules **201a-c** in series. Tritiated waste water is fed to an electrolyzer **120** to produce oxygen, which is vented to atmosphere, and tritiated hydrogen gas. The tritiated hydrogen gas is mixed with a carrier gas from carrier gas source **197** such as helium or argon, is pressurized and heated and passed through a first APS module **201a;** within the APS module **201a,** gases permeate the stainless steel frit and the PGM layer at different rates, the lighter hydrogen permeating more quickly than the heavier tritiated hydrogen (e.g., HT, $T_2$). Thus the hydrogen gas fraction may be drawn off **238a** the first region of the APS module **201a**, as previously described, and either vented or captured for other uses. The carrier gas exiting the module **201a** may be vented to atmosphere or preferably recirculated through module **201a**. Venting or recirculating the carrier gas also applies to modules **201b** and **201c**. The gas containing heavier hydrogen molecules is then directed **235a** through a second APS module **201b,** where further separation takes place. Again the lighter hydrogen fraction may be drawn off **238b** and vented or captured for other uses. The gas containing heavier hydrogen molecules is directed **235b** through a third APS module **201c**. Again the lighter hydrogen fraction may be drawn off **238c** and vented or captured for other uses. Gas captured in the central region of the third and final APS module **201c** is recirculated through module **201a**, **201b** or **201c**. Gas captured in the last region of the APS module **201c** is passed to final disposition **66**. Passing the gas through each APS module **201** further separates lighter hydrogen molecules from heavier hydrogen molecules and results in a purer, more concentrated final tritium product.

## MODULE 4 AND SYSTEM E

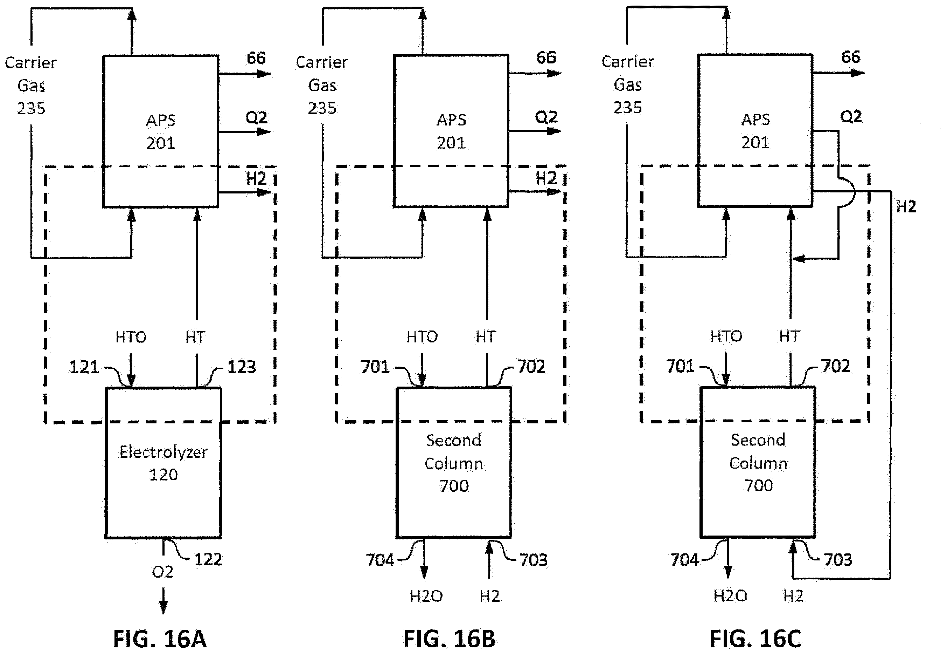

Figure **16** illustrates the natural evolution of the system following the substitution of the electrolyzer **120** of Figure **14** with a second column **700**. Figure **16A** depicts the embodiment of Figure **14** with the APS column **201** in a system with an electrolyzer **120**. Figure **16B** depicts the substitution of the electrolyzer **120** with the second column **700**. Since the APS column **201** input is the same as the second column **700** output the system can become a nearly closed loop as depicted in Figure **16C**.

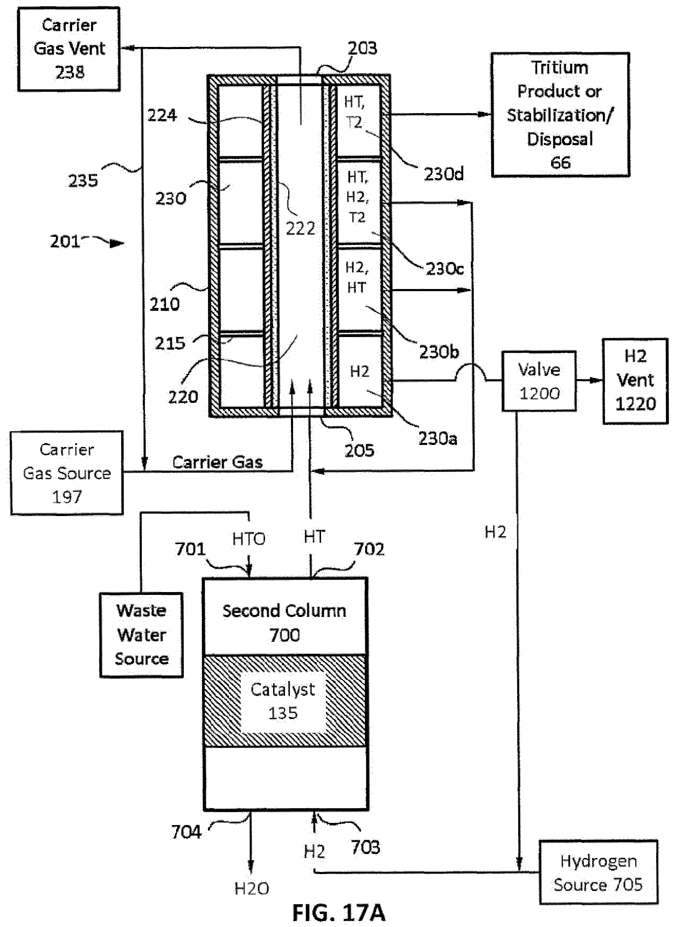

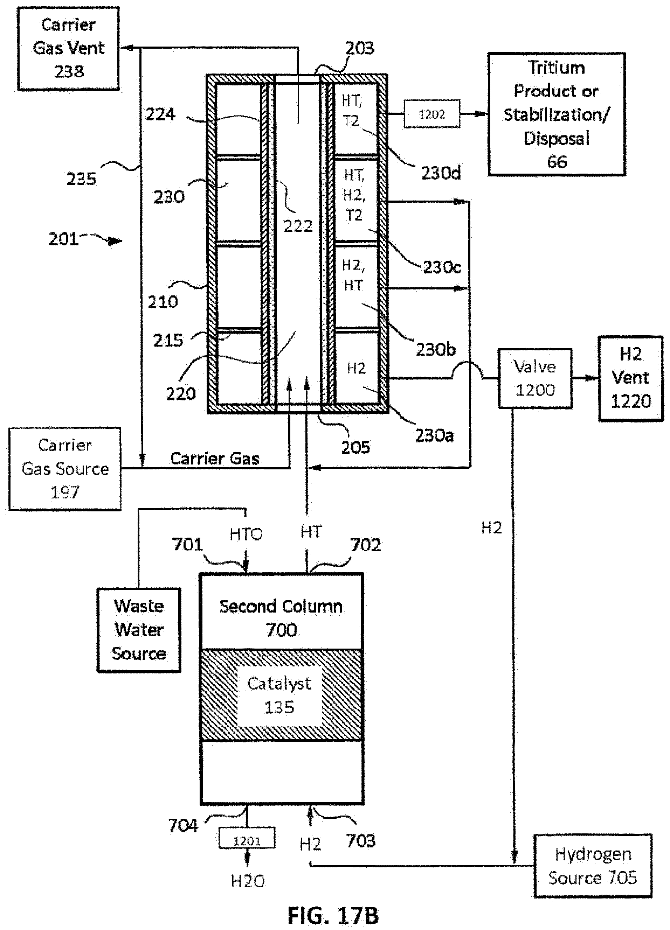

Figure **17A** depicts an embodiment of Figure **16C** which combines an APS module with an LPCE column. The result is a permeation based tritium separation system which can achieve a greater concentration and purity of final tritium product than achieved through either approach individually. Figure **17B** depicts an embodiment of Figure **17A** with the addition of valves at the outlets.

Contaminated (i.e. tritiated) waste water is introduced to the system at inlet **701** at the top of the second column **700**. The liquid trickles down the column through the previously described catalyst **135** and is stripped of its tritium, exiting the column **700** at outlet **704** (and through valve **1201** in Figure **17B**) as clean water for disposition or re-use. Simultaneously hydrogen, initially from source **705** and later supplemented by gas from chamber **230a,** (i.e. a combination thereof) is introduced to the second column **700** at inlet **703**. The rising hydrogen gas strips the tritium from the catalyst **135** and exits the second column **700** at outlet **702** as a complex hydrogen gas, comprising a number of hydrogen isotopes and isotope combinations (e.g. $H_2$, HT, $T_2$).

The gas at outlet **702** may be mixed with a carrier gas, such as helium or argon, initially from a carrier gas source **197,** and later from APS module **201** outlet **203,** and enters the APS module **201** at inlet **205** (i.e. the carrier gas is recycled). In many embodiments, the gases are pressurized as they enter the APS module **201.** In some embodiments, the gases are heated as they enter the APS module **201.** In the illustrated example embodiment, the gases, under pressure and slightly elevated temperature, enter at inlet **205** of the cylindrical APS module **201** and travel along the length of the APS module **201.** Within the APS module **201,** the hydrogen gas and the carrier gas initially travel within the interior volume **220** of the module. The gas mixture from the intermediate compartments **230b** and **230c** is reintroduced to the APS module **201** at inlet **205** for further processing. The heavier tritiated hydrogen gas, collected in the compartment **230d** close to the outlet **203** at the top of the APS module **201**, passes from the APS module **201** to final disposition or further separation treatment **66**. In some embodiments, such as in Figure **17B**, the tritiated hydrogen gas is released through a valve **1202**. In some embodiments the tritium content of the tritiated hydrogen gas is monitored and is only released through valve **1202** when the tritium content meets a predetermined level. The lighter hydrogen gas (which is mostly H$_2$) accumulated in compartment **230a** is passed through a valve **1200** where the gas is passed through at least one of a vent **1220** and inlet **703** at the bottom of the second column **700**.

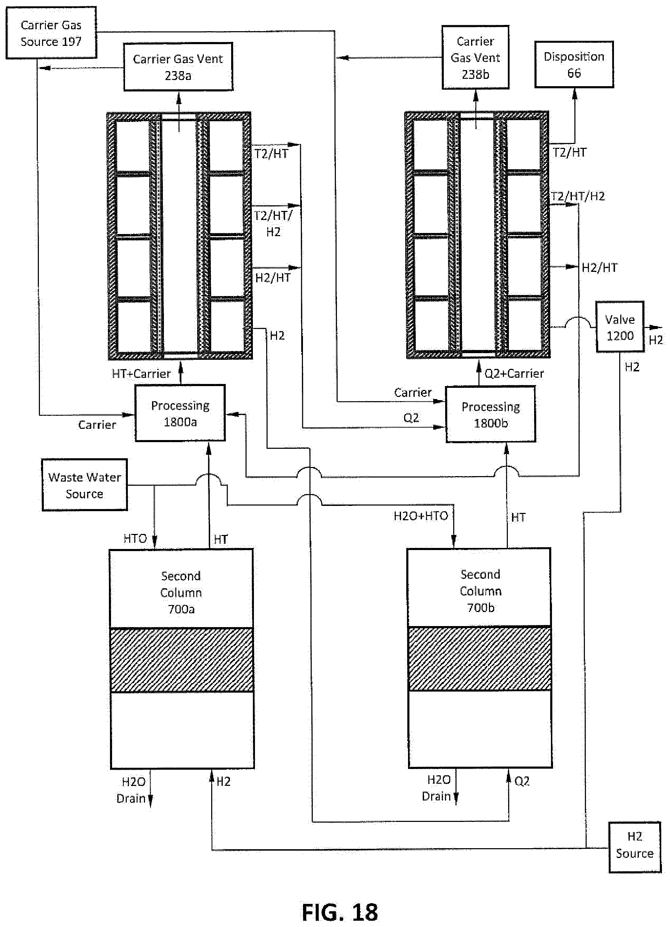

Figure **18** depicts the system of Figure **17** in series. The two APS modules function much like the series shown in Figure **15.**

MODULE 5 - CCE

Many of these system elements are well known in the art of Tritium extraction and separation such as the electrolyzer disclosed as Module 1 in TRS systems A, B and C; the LPCE forward reaction as disclosed as Module 2 in systems A and D; the LPCE reverse extraction as disclosed as Module 3 in systems B, D and E; the APS element as disclosed as Module 4 in systems C, E and F; and one other extraction process has been anticipated, what is termed in the art as electrochemical extraction (ECE). ECE can be operated at low power to improve the transfer of hydrogen through a membrane. This approach operates in such a way that the transferred hydrogen is enriched in the heavier isotope, and the portion not transferred is enriched in the lighter isotope. By applying the pressure rise resulting from the transfer, tritium can be removed from hydrogen or deuterium.

In an embodiment, the electrochemical cell comprises the following features: two sides, with anode and cathode end plates, electrical connectors, and current carriers; a proton exchange membrane or polymer electrolyte membrane (PEM) in the middle, which in preferred embodiments comprises a solid polymer-based electrolyte; gas diffusion layers (GDL) comprising catalyst-coated porous conductors attached on either side of the PEM membrane, which together with PEM form a membrane electrode assembly (MEA); and a mechanical housing with a hydrogen feed point, a product outlet, and an outlet for excess hydrogen (raffinate), as well as appropriate internal flow paths for the fluids on either side of the MEA.

When a small electric potential (below 1.0 volt) is applied between the anode and the cathode and hydrogen is supplied to the electrochemical cell, hydrogen isotope separation occurs producing one stream of hydrogen enriched in the heavy isotope and one hydrogen stream depleted in the heavy isotope.

Without wishing to be limiting in any way, it is envisioned that using certain configurations of the electrochemical cells and methods described herein can provide one or more of the following beneficial features:

    a. low electrical energy: unlike a water electrolysis cell, only a small amount of electrical energy may be needed to separate deuterium or tritium from protium;
    b. only hydrogen gas and water are involved: there is no oxygen production according to the reactions carried out by the described electrochemical cells, and thus the use of oxygen sensitive and oxygen safety related materials is reduced or eliminated;
    c. simultaneous enrichment and depletion: the described electrochemical cells can enrich one portion of a feed stream while depleting the other with deuterium or tritium simultaneously, which makes it easier for the cell to be used in reversible applications.
    d. low or complete lack of electro-catalyst on the cathode side allows the cell to operate in isotope depletion mode with respect to the feed isotope concentration and may reduce significantly the cost of cell construction.

The electrochemical cell and methods of the present invention can, in certain embodiments, be used in the production of heavy water, e.g. for general use, or for use in the nuclear industry; be used in the detritiation of light water, for example as a means for waste remediation; be used in the enrichment or concentration of tritium, for example.

The electrochemical cell and methods of the present invention will now be described in further detail with reference to one non-limiting embodiment of the electrochemical cell, referred to herein as a Isotope Transfer Electrochemical Cell (ITEC).

Unlike the water electrolysis cells currently used for hydrogen isotope separation, the ITEC can operate at low cell voltages since the hydrogen transfer reaction employed is relatively more facile than the water decomposition reaction. As will be described in further detail below, the ITEC can also be used as an electrochemical compressor to pump a certain isotopic hydrogen gas to high pressures.

The principle of operation of the ITEC is that hydrogen is passed through a proton exchange membrane (PEM) under the influence of an electric current. The ITEC arrangement thus includes the cathode half of a PEM water electrolysis cell and anode half of a PEM fuel cell. The hydrogen is first oxidized on the inlet (anode) side of the membrane to protons which transfer to the cathode side through certain transport mechanisms and are reduced to re-form hydrogen gas. In an electrochemical compressor, the objective is for the electric current to produce the hydrogen at a higher pressure at the cathode than the anode side. In the ITEC, on the other hand, the objective is to preferentially transfer one of the hydrogen isotopes from the anode side to the cathode side of the cell. In practice, part of the feed stream to the anode passes through the membrane to the cathode and is enriched (or depleted if there is no catalyst on the cathode side) in one of the isotopes, with the remaining hydrogen from the feed stream being depleted in that isotope. The electrochemical process of transferring hydrogen through a PEM in this way requires no moving parts, uses materials that are well-developed and robust, and requires modest voltages and hence, power. Thus, this method of hydrogen isotope separation has the potential to be both practical and economical. Detailed discussion is further disclosed in patent application Low-Energy Electrochemical Separation of Isotopes, Ser. No. PCT/CA2014/000293 filed March 28, 2014, with a priority date of March 29, 2013, which is herein incorporated by reference in its entirety.

Single Cell Configuration:

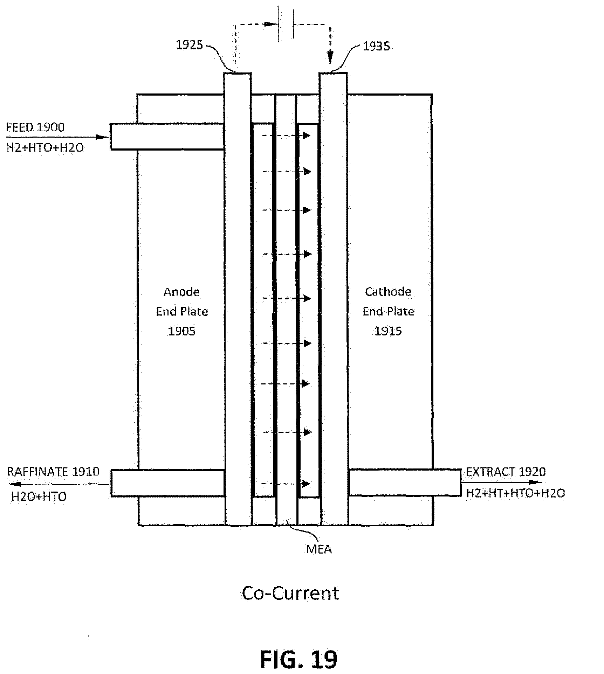

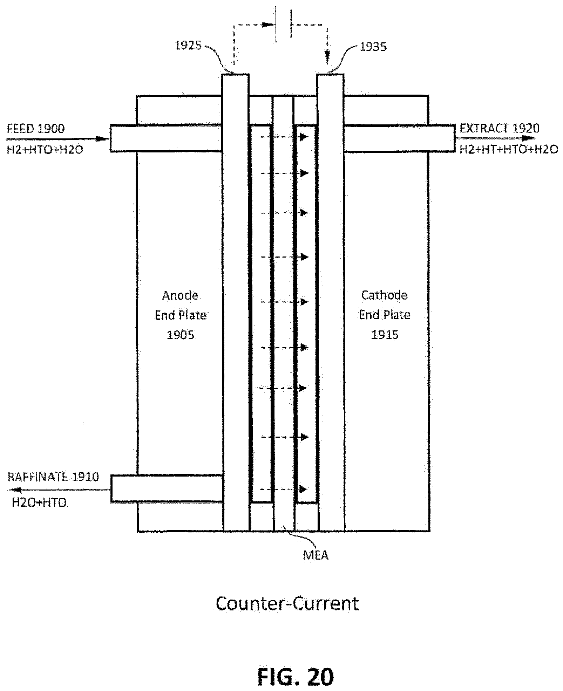

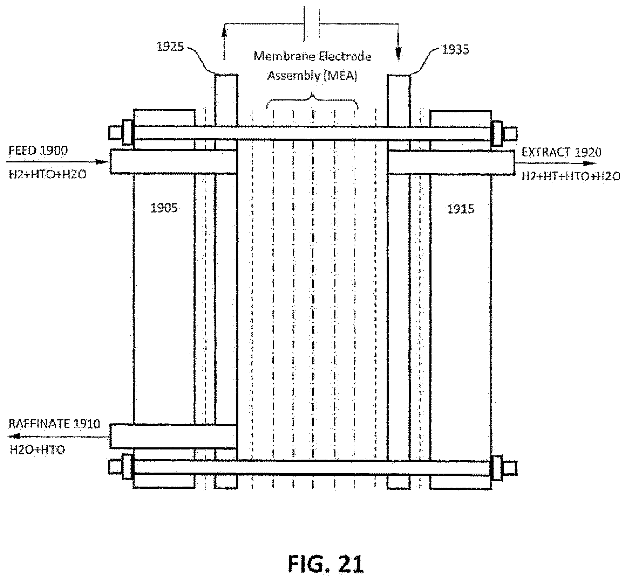

Figures **19** through **21** depict the ITEC, hereafter referred to as CCE for either co-current or counter current exchange. Figure **19** depicts a co-current CCE module, Figure **20** depicts a counter-current CCE module, and Figure **21** depicts the CCE of Figure **20** in more detail. The schematic of a simple version of a CCE with internal components is shown in Figure **21**. The ITEC looks very similar to other types of PEM electrochemical cells. It has several layers of square or circular shaped components held together by a set of bolts along its perimeter. There are two separated sides in the cell: (i) anode side, where the hydrogen gas is fed and excess hydrogen leaves; and (ii) cathode side, where hydrogen gas is produced and possibly pumped to a higher pressure. The components of the illustrated cell design are described below:

1. End-plates and insulator: There are two flanges on the outer sides of the cell to hold everything together. These flanges serve as the end plates of the cell with openings for feed inlet **1900,** extract outlet **1910,** and raffinate outlet **1920.** In the embodiment illustrated, the anode side flange and the cathode side flange is made of stainless steel. Other materials capable of withstanding pressure and electrochemical environment may also be used. There is a thin sheet in between the end plate and the electrical connector plate that provides insulation against electrical current from getting to the end plate.

2. Electrical connector plates: Next to the insulated thin sheet toward the center are the anode and cathode electrical connector plates **1925** and **1935,** respectively, as shown in Figures **19** through **21.** In the embodiment illustrated, they both are made of titanium or stainless steel or aluminum and are electrically insulated from the end-plates. The CCE is connected to an external direct current (DC) power source via these two plates.

3. Current carrier: These are titanium or stainless steel or aluminum based mesh, shaped according to the geometry of the cell active area that help carry current to the electrodes of the ITEC. The meshing also forms a pathway for humidified gas accessing the anode or discharging from the cathode during operation. Design and development of the current carrier is focused in reducing the resistance to electronic pathway, while maintaining adequate pathway for the hydrogen gas-water vapor mixture that reside behind the gas diffusion layer.

4. Electrode assembly. This is the combination of gas diffusion layer (GDL) and the catalyst layer available for the reaction. The constituents for this assembly could be the same on both anode and cathode sides, or different on either side depending on the nature of the isotopic separation required.

a) Gas diffusion layer (GDL): This has a layer of material that is permeable to gas and moisture; is electrically-conductive and; is partially hydrophobic (either blended or coated with water-repelling compound such as Teflon®). Often a type of carbon paper or carbon cloth is used as a GDL material. Other materials with similar properties can be used depending on the need to reduce electronic resistance, improve cell performance and reduce cost.

b) Catalyst: The catalyst in the form of carbon supported-platinum powder (other similar catalysts may be used primarily to reduce cost while maintaining performance) is mixed along with a polymer like Nation® and sprayed or printed or coated on to the GDL to form the electrode assembly.

5. Proton exchange membrane or polymer electrolyte membrane (PEM) **1950:** In this cell the electrolyte is in the form of a polymer that creates ionic transport paths when hydrated (brought in contact with water or water-vapor). Such membranes are commercially available, including membranes made from the polymer Nafion® with varying dry thicknesses available for use. In certain non-limiting embodiments, membranes made with DuPont Nation® NR212, NI15, NI17 and NI110, or with sulphonated PEEK may be used. The membrane thicknesses when dry can vary, in some instances, from about 0.05 mm to about 0.25 mm. The membrane thickness changes when hydrated depending on its polymer's characteristic.

6. Membrane electrode assembly (MEA): This is a combination of the membrane with the anode and cathode electrode assemblies (GDL and catalyst layer combined), and can be made either as one integrated assembly by pressing them together at a certain temperature and pressure for an amount of time or by just arranging them in layers as shown in Figure **21** and letting the pressure from the bolts hold these three layers together.

7. Gas and vapor flow inlet and outlets **1900, 1910,** and **1920:** There are three ports (made of plastic or stainless steel fittings) for the gas and vapor/liquid to enter and leave the cell:

a) FEED: The feed contains hydrogen gas in isotopic equilibrium with water vapor or water. The moisture in the hydrogen is necessary to keep Nafion®-type membranes wet, which increases the proton conductivity, of the membranes. The feed stream enters the anode side of the cell through the inlet port **1900** as shown in Figure **21.** The actual feed flow rate and composition varies depending on the operating conditions.

b) EXTRACT: The extract contains the isotopically enriched or depleted hydrogen gas and water vapor/water. This is the product stream that exits the cell on the cathode side as shown in Figure **21.** The hydrogen gas in the extract can be at elevated pressure.

c) RAFFINATE: The raffinate contains the balance of feed, typically hydrogen gas and water vapor or water. It will contain the balance of the isotope not transferred to the extract.

The raffinate stream exits the cell on the anode side as shown in Figure **21.**

MODULE 5 AND SYSTEM F

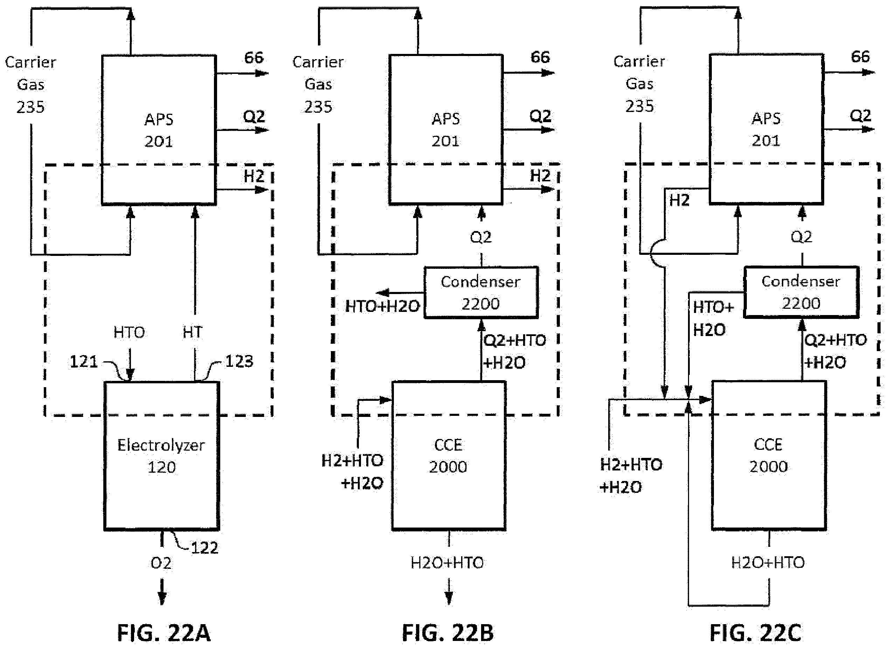

Figure **22** illustrates the natural evolution of the system following the substitution of the electrolyzer **120** of Figure **14** with a CCE module **2000.** Figure **22A** depicts the embodiment of Figure **14** with the APS column **201** in a system with an electrolyzer **120.** Figure **22B** depicts the substitution of the electrolyzer **120** with the CCE module **2000.** Since the APS module **201** input is the same as the CCE module **2000** output the system can become a nearly closed loop as depicted in Figure **22C.**

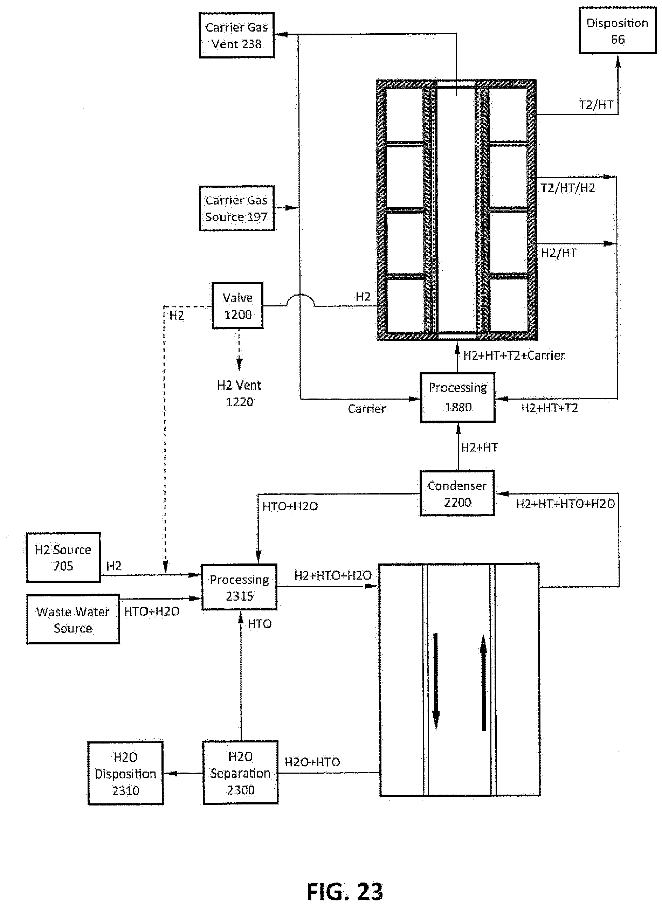

Figure **23** depicts the system of Figure **22C** in more detail. The APS module **201** functions as shown and described in Figure **14.** The $H_2$ extracted from the APS module **201** can optionally be vented to atmosphere or collected at **1220,** or it can be joined with $H_2$ source **705** and fed into the CCE module **2000.** A processing step **1880** is added just prior to the APS module **201** wherein processing involves one or more of the following processes: heating, humidifying, drying, mixing, combining, and separation, among other things. The CCE module functions as shown and described in Figures **19** through **21.**

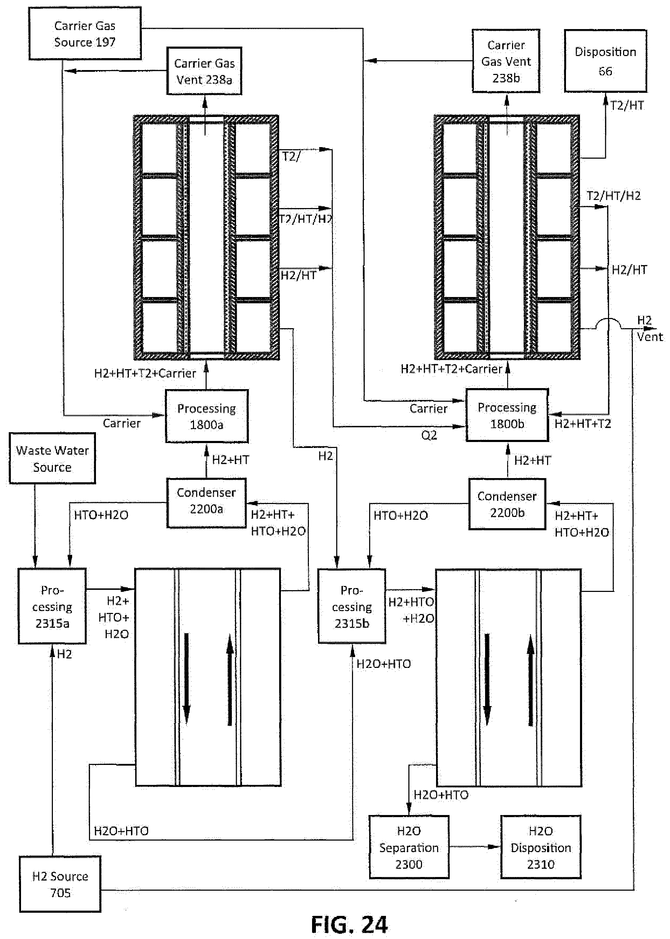

Figure **24** depicts the system of Figure **23** in series.

PROCESS VARIATIONS

The present invention will be described in greater detail by way of specific examples of alternate embodiments. The following examples are offered for illustrative purposes only, and are not intended to limit the invention in any manner. Those of skill in the art will readily recognize a variety of noncritical parameters which can be changed or modified to yield essentially the same results. It should also be noted that heavy water, DTO, may replace HTO and the process will proceed according to the same equations.

HT REMOVAL

In an embodiment of Figure **12,** if HT gas is required rather than HTO, then the HT gas can be removed at **1110.** For every mole of HT gas removed, one mole of water ($H_2O$) has to be removed from the drain and additional 1 mole of $H_2$ gas must be added into the bottom of the second column **700** at inlet **703.**

Further, if concentration of HT gas for a volume reduction operation is not desired, the process can be maintained at equilibrium through a removal step in the HT cycle. For every one mole of water ($H_2O$) diverted at drain and removed from the system, one mole of HT gas remains to either be catalyzed with one mole of water ($H_2O$) or can be removed from the system as HT gas. The removed HT gas can simply be compressed and transferred to an external processing facility or presented to a process designed to absorb the elemental hydrogen.

CATALYSTS

A variety of catalysts from various sources can be used at a variety of pressures, temperatures, gas flow rates, and molar ratios in order to establish the most efficient detritiation parameters. The preferred embodiment discloses a Teflon supported PGM catalyst, it should be understood the metal selected can be of a metal in the class of PGM, it may be mixed or alloyed with at least one other metal engineered specifically for process throughput. The hydrophobic coating as disclosed in the preferred embodiment is of polytetrafluoroethylene (PTFE); other coatings as discussed above can be used, it is well known that PTFE has improved life cycle characteristics over other coatings, but operates at lower conversion rates. It may be a desirable trade off of efficiency for life cycle in some embodiments.

ADDITION OF HUMIDIFIERS, DEHUMIDIFIERS, HEATERS AND PUMPS

In an effort to scale the extraction process:

a. One or more humidifiers and/or dehumidifiers can be added ahead of or after the catalyst depending on where vapors are desired to be created and condensed.
b. A humidifier and or heaters can be installed in the process as required, such as the hydrogen gas stream.
c. One or more humidifiers or dehumidifiers may be added outside one or more of the columns at one or both ends depending on where vapors are desired to be created and condensed.
d. Pumps, flow detectors, and valves can be added at points in the system, thereby establishing and maintaining a circulating profile through the system, resulting in a managed mass balance of circulating fractions.
e. A variety of liquid and gas flow distributors can be used inside the columns to establish the most efficient flow distribution.

ALTERNATE CONFIGURATIONS

A variety of configurations can be implemented, including but not limited to the connection and positioning of the two modules and module sizes as they relate to a variety of flow rates, molar ratios, and feed concentrations.

The above specification and examples provide a complete description of the structure and use of an exemplary embodiment. Although certain embodiments have been described above with a certain degree of particularity, or with reference to one or more individual embodiments, those skilled in the art could make numerous alterations to the disclosed embodiments without departing from the scope of this invention. As such, the illustrative embodiment of the present embodiment is not intended to be limited to the particular forms disclosed. Rather, they include all modifications and alternatives falling within the scope of the claims, and embodiments other than the ones shown may include some or all of the features of the depicted embodiments. For example, components may be combined as a unitary structure and/or connections may be substituted. Further, where appropriate, aspects of any of the examples described above may be combined with aspects of any of the other examples described to form further examples having comparable or different properties and addressing the same or different problems. Similarly, it will be understood that the benefits and advantages described above may relate to one embodiment or may relate to several embodiments.

In some embodiments one or more monitors or other sensors may be located at one or more of the system outlets. In some embodiments the one or more monitors or other sensors may be used to monitor for radioactive isotope content, such as tritium content, in the products to determine if they meet one or more predetermined levels such as environmental and operational levels or predetermined release criteria. In some embodiments one or more of the system products such as water and hydrogen are low purity e.g. they contain a percentage of one or more radioactive isotopes such as tritium wherein the percentage is typically in the range of 0.1% to 10% of the total tritium inventory.

The release of low purity products may be based upon environmental and/or operational levels considered allowable for the particular site and/or products types. In some embodiments tritiated water (e.g. $H_2O$ containing a percentage of HTO) and/or H2 gas (containing a percentage of HT) is released to the environment when it reaches a predetermined release criteria. Operational limits may be greater than or lower than release limits.

In some embodiments the products containing primarily radioactive isotopes such as tritium (e.g. $T_2$) may be low purity. In some embodiments the extracted tritium comprises at least one of the carrier gas, deuterium, and hydrogen gas. Tritiated gas removed from the system may be at least one of processed, stabilized, purified, and stored.

For the sake of convenience, the operations are described as various interconnected functional blocks or distinct software modules. This is not necessary, however, and there may be cases where these functional blocks or modules are equivalently aggregated into a single logic device, program or operation with unclear boundaries. In any event, the functional blocks and software modules or described features can be implemented by themselves, or in combination with other operations in either hardware or software.

Having described and illustrated the principles of the invention in a preferred embodiment thereof, it should be apparent that the invention may be modified in arrangement and detail without departing from such principles. Claim is made to all modifications and variation coming within the spirit and scope of the invention as claimed.

NUMBERED CLAUSES

1. A system for the continuous low energy extraction of tritium from a tritiated source, comprising:

a liquid phase catalytic exchange column comprising a catalyst, operably configured to:

receive hydrogen gas from a first inlet,

receive the tritiated source from a second inlet, wherein the tritiated source comprises a first concentration of tritiated water,

use the catalyst to exchange the hydrogen gas with the tritiated source yielding HT gas and a second concentration of tritiated water, wherein the second concentration of tritiated water is less than the first concentration of tritiated water,

monitor tritium content of the second concentration of tritiated water with a first tritium monitor for a first predetermined level, and

responsive to detecting the first predetermined level, release the second concentration of tritiated water through a first valve;

a gaseous permeation system comprising a permeable barrier for the selective extraction of gases, operably configured to:

receive a carrier gas from a third inlet,
receive a mixture of tritiated gas and H2 gases from a fourth inlet,

use the permeable barrier to selectively extract and separate the tritiated gas and the H2 gas into different regions of the gaseous permeation system,

monitor tritium content of the extracted H2 gas with a second tritium monitor for a second predetermined level, and

responsive to detecting the second predetermined level, at least one of reintroduce the H2 gas through the first inlet and release the H2 gas through a second valve, remove the tritiated gas from a third valve.

2. The system of numbered clause 1, wherein the tritiated source is one of light water and heavy water.

3. The system of numbered clause 1, wherein the continuous low energy extraction is for high volume low concentration tritiated source.

4. The system of numbered clause 1, wherein the selective extraction of tritium from the tritiated source in the liquid phase catalytic exchange column occurs at a first temperature, a first pressure, and a first flow rate that is greater than the selective extraction at a second temperature, a second pressure, and a second flow rate.

5. The system of numbered clause 4, wherein the first temperature is 60°C-100°C.

6. The system of numbered clause 4, wherein the first pressure is 1atm-2atm.

7. The system of numbered clause 1, wherein the liquid phase catalytic exchange column is operably configured as a catalyzer bed, wherein the catalyzer bed includes at least one of a first volume of hydrophobic exchange media and a first volume of hydrophilic exchange media.

8. The system of numbered clause 7, wherein the first volume of hydrophobic exchange media is at least one of equal to and greater than a second volume of hydrophobic exchange media.

9. The system of numbered clause 7, wherein the first volume of hydrophilic exchange media is at least one of equal to and greater than a second volume of hydrophilic exchange media.

10. The system of numbered clause 1, wherein the liquid phase catalytic exchange column is operably configured to distribute a first volume of liquid through a first liquid distributor and is configured to distribute a second volume of liquid through a second liquid distributor.

11. The system of numbered clause 10, wherein the first volume of liquid is distributed at a first rate, and wherein the second volume of liquid is distributed at a second rate, wherein the first rate is at least one of equal to and greater than the second rate.

12. A method for the continuous low energy extraction of tritium from a tritiated source, comprising:

using a liquid phase catalytic exchange column comprising a catalyst, operably configured to:

receive hydrogen gas from a first inlet,

receive the tritiated source from a second inlet, wherein the tritiated source comprises a first concentration of tritiated water,

use the catalyst to exchange the hydrogen gas with the tritiated source yielding HT gas and a second concentration of tritiated water, wherein the second concentration of tritiated water is less than the first concentration of tritiated water,

monitor tritium content of the second concentration of tritiated water with a first tritium monitor for a first predetermined level, and

responsive to detecting the first predetermined level, release the second concentration of tritiated water through a first valve;

using a gaseous permeation system comprising a permeable barrier for the selective extraction of gases, operably configured to:

receive a carrier gas from a third inlet,
receive a mixture of tritiated gas and H2 gases from a fourth inlet,
use the permeable barrier to selectively extract and separate the tritiated gas and the H2 gas into different regions of the gaseous permeation system,
monitor tritium content of the extracted H2 gas with a second tritium monitor for a second predetermined level, and
responsive to detecting the second predetermined level, at least one of reintroduce the H2 gas through the first inlet and release the H2 gas through a second valve,
remove the tritiated gas from a third valve.

13. The method of numbered clause 12, wherein the tritiated source is one of light water and heavy water.

14. The method of numbered clause 12, wherein the continuous low energy extraction is for high volume low concentration tritiated source.

15. The method of numbered clause 12, wherein the selective extraction of tritium from the tritiated source in the liquid phase catalytic exchange column occurs at a first temperature, a first pressure, and a first flow rate that is greater than the selective extraction at a second temperature, a second pressure, and a second flow rate.

16. The method of numbered clause 15, wherein the first temperature is 60°C-100°C.

17. The method of numbered clause 15, wherein the first pressure is 1atm-2atm.

18. The method of numbered clause 12, wherein the liquid phase catalytic exchange column is operably configured as a catalyzer bed, wherein the catalyzer bed includes at least one of a first volume of hydrophobic exchange media and a first volume of hydrophilic exchange media.

19. The method of numbered clause 18, wherein the first volume of hydrophobic exchange media is at least one of equal to and greater than a second volume of hydrophobic exchange media.

20. The method of numbered clause 18, wherein the first volume of hydrophilic exchange media is at least one of equal to and greater than a second volume of hydrophilic exchange media.

21. The method of numbered clause 12, wherein the liquid phase catalytic exchange column is operably configured to distribute a first volume of liquid through a first liquid distributor and is configured to distribute a second volume of liquid through a second liquid distributor.

22. The method of numbered clause 21, wherein the first volume of liquid is distributed at a first rate, and wherein the second volume of liquid is distributed at a second rate, wherein the first rate is at least one of equal to and greater than the second rate.

**Claims**

1. A system for continuous low energy extraction of tritium from a tritiated source, comprising:

a first intermodal container including a first liquid phase catalytic exchange column, the first liquid phase catalytic exchange column comprising a first catalyst, a first inlet, a second inlet, and a first outlet, wherein the first liquid phase catalytic exchange column is configured to:

receive a first hydrogen (first H2) gas from the first inlet,
receive the tritiated source from the second inlet, wherein the tritiated source comprises a first concentration of tritiated water,
use the first catalyst to exchange protium ions in the first H2 gas with tritium ions in the tritiated source to yield tritiated hydrogen (HT) gas at the first outlet and a second concentration of tritiated water, wherein the second concentration of tritiated water is less than the first concentration of tritiated water,
monitor tritium content of the second concentration of tritiated water with a first tritium monitor for a first predetermined level, and
responsive to detecting the first predetermined level, release the second concentration of tritiated water to the second liquid phase catalytic exchange column,

a second intermodal container including a second liquid phase catalytic exchange column, the second liquid phase catalytic exchange column comprising a second catalyst, a third inlet, a fourth inlet, and a second outlet, wherein the second liquid phase catalytic exchange column is configured to:

receive the HT gas from the first outlet via the third inlet,
receive the second concentration of tritiated water from the fourth inlet,
use the second catalyst to exchange tritium ions in the HT gas with protium ions in the second concentration of tritiated water to yield a second H2 gas from a second outlet and a third concentration of tritiated water, wherein the third concentration of tritiated water is greater than the second concentration of tritiated water, monitor the tritium content of the third concentration of tritiated water with a second tritium monitor for a second predetermined level, and
responsive to detecting the second predetermined level, release the third concentration of tritiated water to the first liquid phase catalytic exchange column,

a third intermodal container including an electrolyzer, the electrolyzer comprising an electrolyzer input and an electrolyzer output, wherein the electrolyzer is configured to:

receive a portion of the third concentration of tritiated water at the electrolyzer input,
split the third concentration of tritiated water into HT gas and oxygen gas, and
release the HT gas from the electrolyzer output to the third inlet.

2. The system of claim 1, wherein the exchange of protium ions with tritium ions in the first liquid phase catalytic exchange column occurs at a first temperature, a first pressure, and a first flow rate and the exchange tritium ions with protium ions in the second liquid phase catalytic exchange column occurs at a second temperature, a second pressure, and a second flow rate.

3. The system of claim 1, wherein the first catalyst includes at least one of a first volume of hydrophobic exchange media and a first volume of hydrophilic exchange media.

4. The system of claim 3, wherein the first volume of hydrophobic exchange media is at least one of equal to and greater than a second volume of hydrophobic exchange media.

5. The system of claim 3, wherein the first volume of hydrophilic exchange media is at least one of equal to and greater than a second volume of hydrophilic exchange media.

6. The system of claim 1, wherein the first liquid phase catalytic exchange column is operably configured to distribute a first volume of liquid through a first liquid distributor and is configured to distribute a second volume of liquid through a second liquid distributor.

7. The system of claim 6, wherein the first volume of a liquid is distributed at a first rate, and wherein the second volume of liquid is distributed at a second rate, wherein the first rate is at least one of equal to and greater than the second rate.

8. The system of claim 1, wherein the second H2 gas at the second outlet is received by the first liquid phase catalytic exchange column.

9. The system of claim 1, wherein the first liquid phase catalytic exchange column and second liquid phase catalytic exchange column each have a top end and a bottom end.

10. The system of claim 9, wherein the first inlet and third inlet are each located on the bottom end of the first liquid phase catalytic exchange column and the second liquid phase catalytic exchange column, respectively, and the second inlet and first outlet, and the fourth inlet and second outlet, each are located on the top end of the first liquid phase catalytic exchange column and the second liquid phase catalytic exchange column, respectively.

11. The system of claim 1, further comprising conveying the tritiated water and the hydrogen gas through the first liquid phase catalytic exchange column and the second liquid phase catalytic exchange column in a continuous closed loop process.

12. The system of claim 1, further comprising a fourth intermodal container comprising a heater.

**13.** The system of claim 12, wherein the heater is configured to produce heated water vapor.

**14.** The system of claim 13, wherein the heated water vapor is combined with the second H2 gas.

**15.** The system of claim 1, further comprising a fourth intermodal container housing a control system configured to operate at least one of the processes of the first liquid phase catalytic exchange column, the second liquid phase catalytic exchange column, and the electrolyzer.

FIG. 1

FIG. 2

FIG. 3

FIG. 4

FIG. 5B

FIG. 5A

24

Purified
Water
Input

| T2 Monitor | Exhaust |
| 375 | 332 |

**131**   H2O      H2   **132**

Condenser
336

Tank
338

LPCE Column
130

**134**                **133**

HTO              HT

| Tritium Product or Stabilization/ Disposal | Heater |
| 66 | 140 |            H2O

O2 ← Electrolyzer
120              ← HTO — Waste Water Input

## FIG. 6

EP 4 289 499 A2

Purified
Water
Input

H2O ↑ H2    H2O ↑ H2    H2O ↑ H2

| LPCE Column 130a | LPCE Column 130b | LPCE Column 130c |

HTO

Waste
Water
Input

Gas Purifier 125a    Gas Purifier 125b    Gas Purifier 125c

↑ O2    HTO    HT    ↑ O2    HTO    HT    ↑ O2    HTO    HT

| Electrolyzer 120a | Electrolyzer 120b | Electrolyzer 120c | Tritium Product or Stabilization/ Disposal 66 |

**FIG. 7**

**601** H2O     H2   **602**

First
Column
600

**INPUTS & OUTPUTS
FIRST COLUMN**

HT + H2O => H2 + HTO
Forward Reaction

**604**        **603** O2

HTO      HT   **123**      **122**

**121**

Electrolyzer
120

**FIG. 8**

HTO          HT
701                    702

Second
Column
700

INPUTS & OUTPUTS
REVERSE COLUMN

H2 + HTO => HT + H2O
Reverse Reaction

704

703

H2O          H2          O2

121                    123          122

Electrolyzer
120

**FIG. 9**

Tritium Product
or Stabilization/
Disposal
66

701 → HTO

HT → 702

Second
Column
700

Tritium Product
or Stabilization/
Disposal
66

123

HTO     HT     O2

122

121

Electrolyzer
120

704 → H2O

H2 ← 703

**FIG. 10A**

**FIG. 10B**

EP 4 289 499 A2

FIG. 11A          FIG. 11B          FIG. 11C

**FIG. 12**

**FIG. 13**

**FIG. 14**

EP 4 289 499 A2

FIG. 15

FIG. 16A

FIG. 16B

FIG. 16C

**FIG. 17A**

**FIG. 17B**

**FIG. 18**

Co-Current

FIG. 19

1925          1935

FEED 1900                                    EXTRACT 1920
H2+HTO+H2O                                   H2+HT+HTO+H2O

Anode                          Cathode
End Plate                      End Plate
1905                           1915

RAFFINATE 1910
H2O+HTO

MEA

Counter-Current

**FIG. 20**

FIG. 21

**FIG. 22A**          **FIG. 22B**          **FIG. 22C**

**FIG. 23**

**FIG. 24**

**EP 4 289 499 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 14748535
- CA 14294033
- CA 2014000293 W
- CA 62239660
- WO 14294033 A
- WO 62239660 A